# EUROPEAN PATENT SPECIFICATION

(11) **EP 0 710 860 B1**
(45) Date of publication and mention of the grant of the patent: **09.10.2002**
(21) Application number: 95307840.9
(22) Date of filing: 02.11.1995
(51) Int. Cl.: G02B 6/38

(54) **Fiber optic connector**
Fiberoptischer Stecker
Connecteur fibre-optique

(30) Priority: 04.11.1994 US 335511; 06.12.1994 US 350446; 30.05.1995 US 453432
(43) Date of publication of application: 08.05.1996
(73) Proprietor: THE WHITAKER CORPORATION, Wilmington, Delaware 19808 (US)
(72) Inventor: Turgeon, Richard Donald, Dracut, Massachusetts 01886 (US); Kaminski III, Joseph Leon, Harrisburg, Pennsylvania 17110 (US); Buchter, Shelly Ann, East Berlin, Pennsylvania 17316 (US); Saliba, Kenneth Norman, Tewksburg, Massachusetts 01876 (US); Edwards, Bryan Thomas, Camp Hill, Pennsylvania 17011 (US); Benner, Richard Eugene, Harrisburg, Pennsylvania 17810 (US); Rossana, Michael Douglas, Harrisburg, Pennsylvania 17110 (US); Erdman, David Donald, Hummelstown, Pennsylvania 17036 (US)
(74) Representative: Warren, Keith Stanley

(56) References cited:
- EP-A- 0 262 765
- EP-A- 0 390 275
- EP-A- 0 624 810
- EP-A- 0 631 161
- EP-A- 0 668 521
- WO-A-95/35520
- GB-A- 2 253 278
- US-A- 4 779 949
- US-A- 5 121 455

## Description

The present invention relates to optical fiber connectors, and a method and apparatus for assembling same.

Optical fiber connectors are extremely important to make critical mechanical connections between the free ends of optical fibers. It is important that the connectors securely retain the connection between the two pieces of optical fiber. A variety of connectors have been developed to provide such connection. For example, U.S. Patent No. 5,073,044 to Egner et al., issued December 17, 1991, assigned to the Assignee of the present invention, shows an optical fiber connector having a right angle strain relief.

The general design of the Egner device is representative of optical fiber connectors. Such a connector includes a tubular body including a ferrule, a coupling nut, biasing means and a retaining ring. The coupling nut and biasing means are axially arranged on the tubular body and retained in position by the retaining ring. The biasing means acts against the coupling nut to provide a secure engagement with the other coupling component with which it is connected.

Typically, the retaining ring used with this type of connector is a C-ring having an open gap along one side for radial attachment to the tubular body. The C-ring is mated with an annular groove formed on an outside surface of the body. U.S. Patent No. 5,121,455 to Palecek, issued June 9, 1992, is an example of a C-ring used to retain a coupling nut and spring on the body of an optical fiber connector. GB Patent No. 2253278 discloses a similar connector in which a C-ring is applied from the side of tubular body to hold the tubular body in engagement with a coupling nut with a coil spring interposed therebetween.

US Patent No. 4,779,949 discloses a different type of connector which terminates two optical fibres in respective ferrules. The connector includes a housing which divides into two pieces along a longitudinal joint. Each ferrule passes through a hole in a stop washer fixed in the housing. A coil spring around each ferrule is compressed between the stop washer and a spring rest which is fixed in a exterior groove on the ferrule thus biasing the ferrule forwardly relative to the housing towards a ferrule connection end.

As the demand for fiber optic technology increases so does the demand for connections between optical fibers. In order to satisfy the demand for optical fiber connectors, it is preferable to automate the assembly process for assembling optical fiber connectors. As with many other automated processes, problems arise with the efficient processing of numerous components during the assembly process as well as the most efficient organization and layout of the process apparatus. It is also important to automate the inspection process where possible so that the production throughput is maintained and bottlenecks, which might be caused by manual inspection, are eliminated.

It would be desirable to provide an optical fiber connector which could be assembled using automated procedures. The C-ring retaining ring due to its radial assembly is not conducive to reliable automated assembly. However, the C-ring retaining ring, or other manual attachment procedures may be a necessary fallback assembly technique in the event of downtime of an automated assembly machine. It is important to provide the ability to use both manual and automated assembly techniques in order to maintain the required level of production output for the optical connectors.

A general object satisfied by the present invention is to provide a tubular body for use with an optical fiber connector which can be assembled using an automated assembly apparatus.

Another object satisfied by the present invention is to provide a tubular body for use with an optical fiber connector which is capable of using an axially attached retaining ring to secure a nut and biasing means in association with the tubular body.

Yet another object satisfied by the present invention is an elongated body structure which prevents a spring of the assembly from being improperly assembled thereby reducing the number of defective assemblies.

Yet another object satisfied by the present invention is to provide an optical fiber connector which has increased manufacturability due to the structure of the tubular body which accommodates attachment of a retaining ring in an axial direction.

Another object satisfied by the present invention is to provide a method of assembling multiple component articles which require precise placement of components in an assembly stream and operations on the components during the assembly process.

Another object satisfied by the present invention is to provide an apparatus which automates the assembly of optical fiber connectors in a continuous process.

Briefly, and in accordance with the foregoing, the present invention envisions an optical fiber connector as defined in claim 11.

The present invention also envisions a method for assembling a multiple component article such as an optical fiber connector as defined in claim 1.

The present invention also envisions an apparatus for assembling an optical fiber connector as defined in claim 6.

Embodiments of the invention will now be described by way of example with reference to the accompanying drawings, wherein like reference numerals identify like elements, and in which:
FIG. 1 is a perspective view of an optical fiber connector having a tubular body including a ferrule and a coupling nut;
FIG. 2 is a cross-sectional side elevational view taken along line 2-2 in FIG. 1 of the optical fiber connector with the tubular body, the ferrule, the coupling nut, biasing means and a retaining ring axially arranged on the tubular body with the coupling nut and the biasing means being retained on the tubular body by the retaining ring;
FIG. 3 is a perspective view of the tubular body and ferrule having an intermediate annular groove and an annular ridge on the outside surface of the tubular body as viewed from the end through which an optical fiber enters the tubular body;
FIG. 4 is a perspective view of the tubular body and ferrule having only an annular ridge on the outside surface of the tubular body as viewed from the end through which an optical fiber enters the tubular body;
FIG. 5 is a cross-sectional end view taken along line 5-5 in FIG. 3 of the tubular body and on which a C-ring has been applied to the annular groove formed on an outside surface of the tubular body;
FIG. 6 is a partial fragmentary, cross-sectional, side elevational view taken along line 6-6 in FIG. 3 showing the C-ring retained in the annular groove;
FIG. 7 is a cross-sectional end view taken along line 7-7 in FIG. 3 and in which a retaining ring has been axially applied to an outside surface of the tubular body;
FIG. 8 is a partial fragmentary, cross-sectional, side elevational view taken along line 8-8 in FIG. 3 showing the retaining ring engaged with the tubular body and abutting the annular ridge formed between the annular groove and the optical fiber entry end;
FIG. 9 is a cross-sectional end view taken along line 9-9 in FIG. 4 and in which a retaining ring has been applied to an outside surface of the tubular body; and
FIG. 10 is a partial fragmentary, cross-sectional, side elevational view taken along line 10-10 in FIG. 4 showing the retaining ring engaged with the tubular body and adjacent the annular ridge formed on the outside surface of the tubular body.
FIG. 11 is a perspective view of the tubular body and ferrule having an alternate embodiment of a retainer attachment zone located on the outside surface of the tubular body as viewed from an optical fiber connecting end;
FIG. 12 is an enlarged, cross-sectional, side elevational view taken along line 12-12 in FIG. 11 showing the structure of the retainer attachment zone;
FIG. 13 is a cross-sectional, side elevational view similar to that shown in FIG. 2 illustrating the alternate embodiment of the retainer attachment zone and in which the biasing means has not been compressed along the tubular body by the coupling nut and in which a retainer has not been attached to the tubular body;
FIG. 14 is an enlarged cross-sectional, side elevational view of the area near the retainer attachment zone of FIG. 13 showing a trailing coil positioned against a surface of a radially extending flange of the coupling nut and an outside surface of the tubular body;
FIG. 15 is a cross-sectional, side elevational view similar to the view as shown in FIG. 13 in which the coupling nut has been displaced along the central axis of the tubular body to partially compress the biasing means with a trailing end coil of the biasing means positioned in the retainer attachment zone;
FIG. 16 is an enlarged cross-sectional, side elevational view of the retainer attachment zone of FIG. 15 showing in greater detail the trailing end coil of the biasing means positioned in the retainer attachment zone being positioned against a surface of the radially, inwardly extending flange of the coupling nut and a sloped surface of the retainer attachment zone;
FIG. 17 is a cross-sectional, side elevational view similar to that as shown in FIGS. 13 and 15 in which the coupling nut has been displaced along the central axis to sufficiently compress the biasing means for exposing the retainer attachment zone for attachment of a retainer thereon; and
FIG. 18 is an enlarged cross-sectional, side elevational view of the retainer attachment zone as shown in FIG. 17 in which the trailing end coil of the compressed biasing means as shown in FIG. 17 is positioned against a surface of the radially inwardly projecting flange of the coupling nut and against the outside surface of the tubular body.
FIG. 19 is an exploded perspective view of the multiple component article as shown in FIG. 1 which has been exploded to show the individual components of the optical fiber connector;
FIG. 20 is a diagrammatic representation of the process and apparatus of the present invention for assembling multiple component articles such as optical fiber connectors;
FIG. 21 is a cross-sectional side elevational view of the first of a series of progressive views showing the process of the present invention in which an elongated body is retained in a fixture of the apparatus of the present invention;
FIG. 22 is a cross-sectional side elevational view of the second of the series of progressive views in which a biasing component is added to the elongated body during the process carried out by the apparatus of the present invention;
FIG. 23 is a cross-sectional side elevational view of the third of the series of progressive views showing the addition of a coupling nut to the elongated body and biasing component during the process carried out by the apparatus of the present invention;
FIG. 24 is a cross-sectional side elevational view of the fourth of the series of progressive views showing the application of a retaining component to an outside surface of the elongated body in the process carried out by the apparatus of the present invention;
FIG. 25 is a reduced scale view showing the arrangement of FIGS 26-28 which are enlarged detailed views of the apparatus of the present invention which, even though on separate sheets, actually comprise one figure;
FIG. 26 shows a station for verifying that a fixture or nest used in the apparatus is free to receive an elongated body and an enlarged plan view of a station which places an elongated body of the multiple component article on the nest which is indexed through the apparatus;
FIG. 27 shows a station which places a biasing component on the elongated body retained in the fixture and a station which places a coupling nut over the biasing component and the elongated body;
FIG. 28 shows a station which places a retaining component on the elongated body carrying the biasing component and the coupling nut, a control device for controlling the apparatus, an inspection station for inspecting the assembled multi-component article, and a device for selectively removing the assembled optical fiber connectors from the nest which operates in response to the results of the inspection;
FIG. 29 is an enlarged partial fragmentary, cross-sectional side elevational view taken along line 10-10 in FIG. 28 showing the inspection station in greater detail;
FIG. 30 is an enlarged, partial fragmentary, side elevational view of a properly assembled optical fiber connector retained in a nest which is inspected by the inspection station shown in FIG. 10 and showing two spaced apart inspection sites imposed thereon;
FIG. 31 is an enlarged, partial fragmentary, side elevational view of an improperly assembled optical fiber connector absent an elongated body;
FIG. 32 is an enlarged, partial fragmentary, side elevational view of an improperly assembled optical fiber connector absent a biasing means component;
FIG. 33 is an enlarged, partial fragmentary, side elevational view of an improperly assembled optical fiber connector absent a coupling nut;
FIG. 34 is an enlarged, partial fragmentary, side elevational view of an improperly assembled optical fiber connector absent a retaining component attached to the upper outside surface of the elongated body;
FIG. 35 is an enlarged, partial fragmentary, cross-sectional, side elevational view taken along line 16-16 in FIG. 28 showing a ram portion and a retaining component delivery portion associated therewith for applying a retaining ring to the optical fiber connector;
FIG. 36 is an enlarged, partial fragmentary, cross-sectional, showing the retaining component delivery portion for delivering and applying a retaining ring to the outside surface of an elongated body of the optical fiber connector;
FIG. 37 is a cross-sectional, bottom plan view taken along line 29-29, in FIG. 36 showing vacuum channels formed in a vacuum plunger for placing a retaining ring on an optical fiber connector;
FIG. 38 is an enlarged, cross-sectional view of the tip of the retaining component delivery portion showing a retaining ring retained thereon;
FIG. 39 is a partial fragmentary, top plan view of the retaining ring apply means as shown in FIG. 20; and
FIG. 40 is a partial fragmentary, cross-sectional view taken along line 32-32 in FIG. 39 showing the placement of a retaining ring feeder track, the delivery of retaining rings to a shuttle block and relative location of a retaining ring shim gate.

While the invention may be susceptible to embodiment in different forms, there is shown in the drawings, and herein will be described in detail, embodiments with the understanding that the present description is to be considered an exemplification of the principles of the invention and is not intended to limit the invention to that as illustrated and described herein.

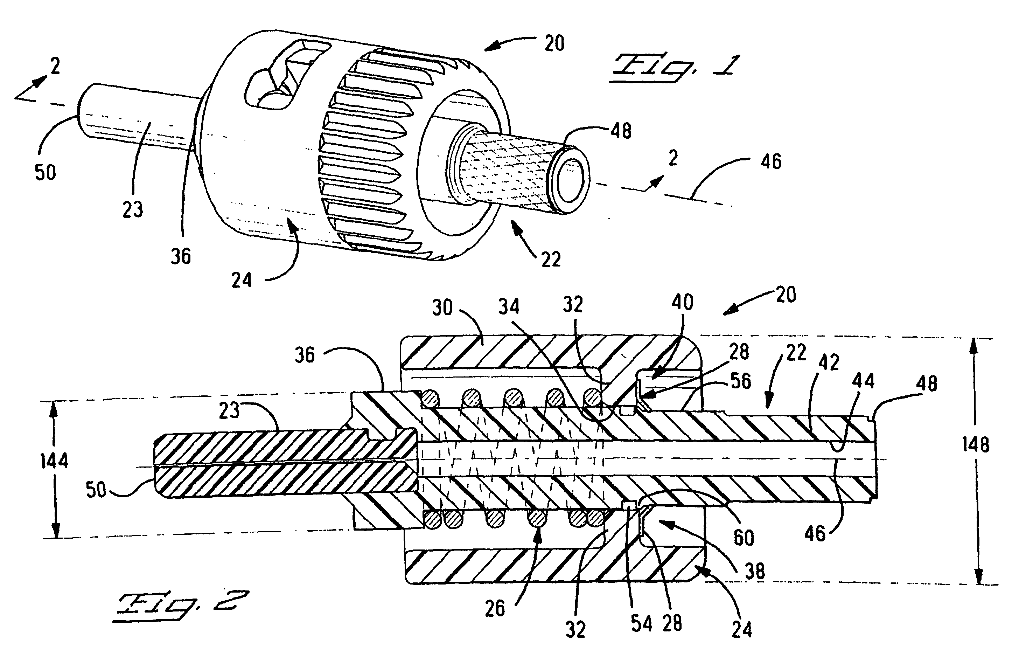

With reference to FIG. 1, an optical fiber connector 20 is shown and includes a tubular body 22, a ferrule 23 connected to the tubular body 22 and a coupling nut 24. FIG. 2 shows the optical fiber connector 20 in cross-section to further illustrate the arrangement of the tubular body 22 and coupling nut 24 and showing biasing means 26 and retaining means 40 of the connector 20 which are not shown in the perspective view of FIG. 1. Preferably, the tubular body 22 is formed of plastic material which is overmolded on the ferrule 23. Alternatively, the tubular body 22 and the ferrule 23 can be integrally molded or machined out of metal. The coupling nut 24 has a generally cylindrical nut body 30 with transversely projecting inner flanges 32 which define a bore 34. The tubular body 22 extends through the bore 34 with the biasing means 26 retained between the flanges 32 and a shoulder 36 formed on the tubular body 22.

The coupling nut 24 and biasing means 26 are retained on the tubular body 22 with the biasing means 26 in compression by the retaining means 40. The retaining means 40 includes a retaining means attachment zone 38 formed on an outside surface 56 of the tubular body 22 and a coupling nut retaining means 28 mounted on the tubular body 22 in the retaining means attachment zone 38. The retaining means attachment zone 38 is configured to accommodate a retaining ring which in a comparative example is radially attached or according to the invention a retaining ring which is axially attached to the tubular body 22.

The tubular body 22 includes a wall 42 which defines a central elongated lumen 44. A central axis 46 extends coaxially through the lumen 44 along the direction of elongation of the tubular body 22. One end of the tubular body 22 defines an optical fiber entry end 48 with the opposite end of the tubular body 22 mating with the ferrule 23 defining an optical fiber connecting end 50. An optical fiber (not shown) placed in the connector 20 extends through the entry end 48 of the tubular body, through the lumen 44, through the ferrule 23 and through the connecting end 50. The ferrule 23 precisely aligns the optical fiber with a corresponding fiber retained in a mating connector ferrule (not shown).

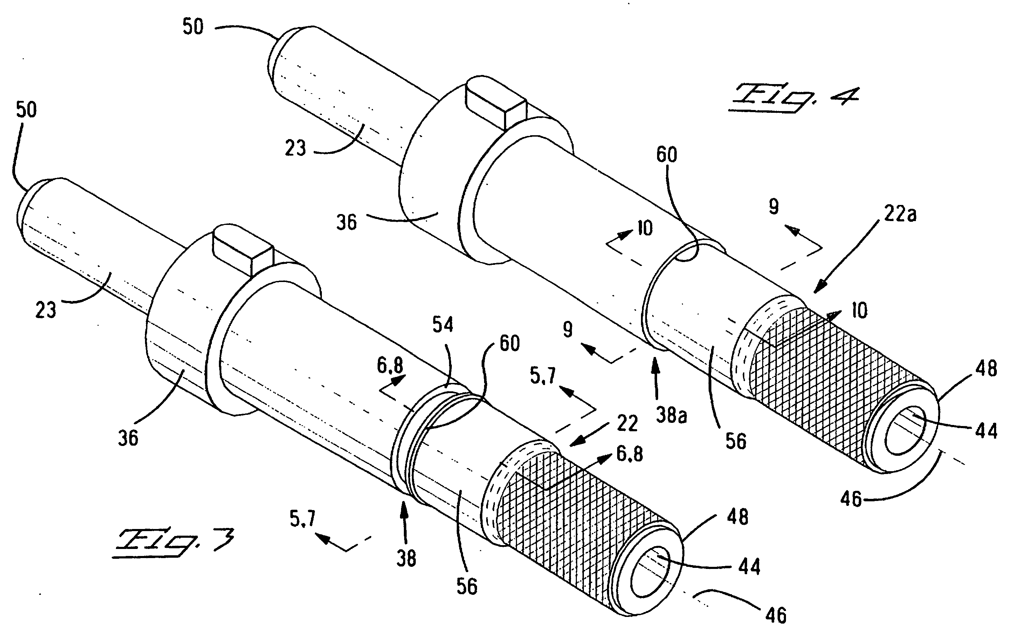

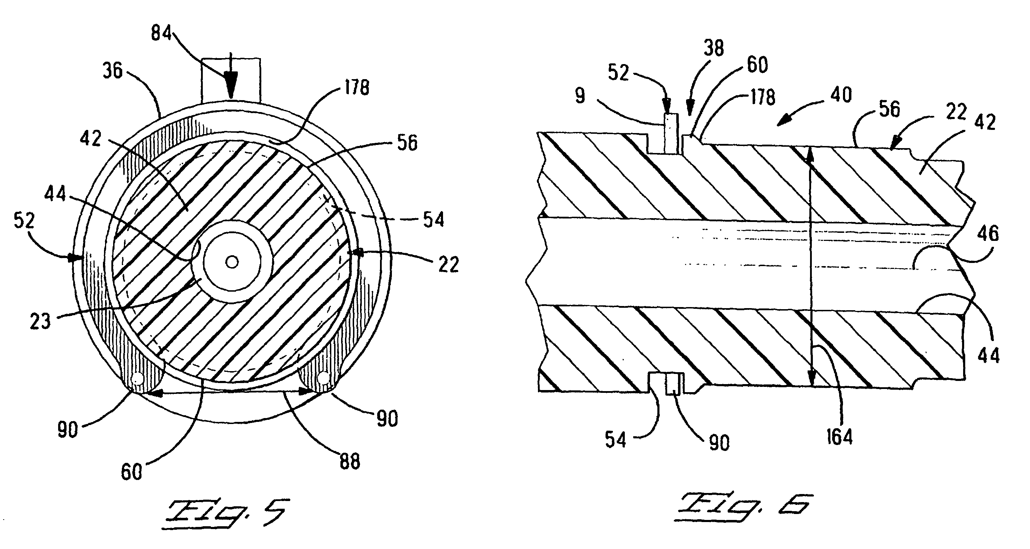

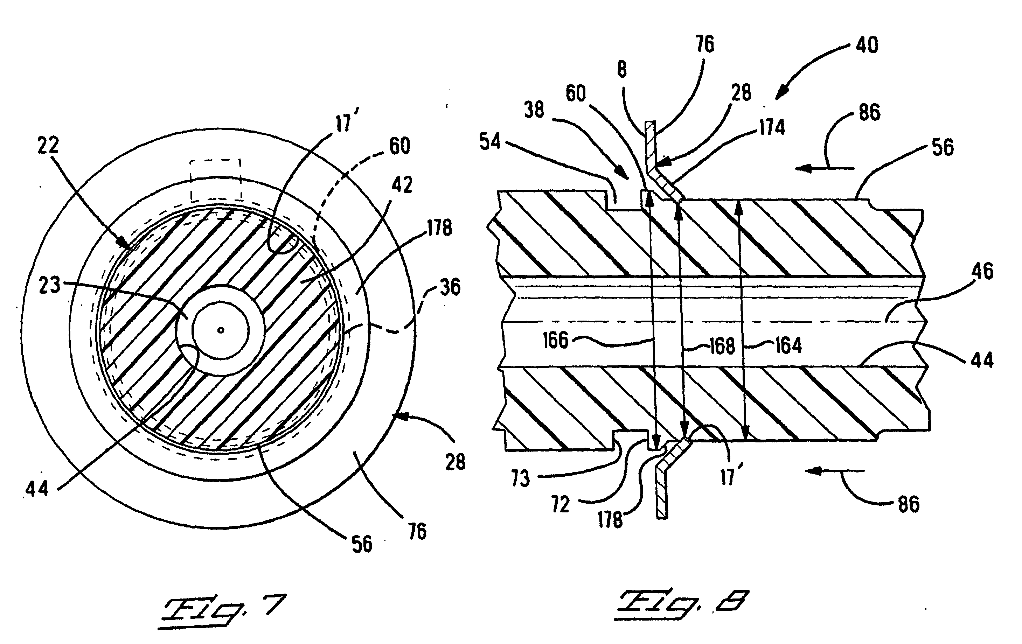

As mentioned above, and with further reference to FIG. 3, the tubular body 22 includes a retaining means attachment zone 38. The retaining means attachment zone 38 accommodates either a radially attached retaining ring or an axially attached retaining ring. A comparative example of a radially attached retaining ring is shown in FIG. 5 and 6 by a C-ring 52 which is engaged in an annular groove 54 formed on an outside surface 56 of the wall 42 of the tubular body. An example of an axially attached retaining ring is the continuous annular retaining ring or retaining ring 28 shown in FIGS. 7 and 8. The retaining ring 28 is axially positioned over the outside surface 56 of the tubular body 22 in close spacing next to an annular ridge 60 which radially projects from the wall 42 of the tubular body 22.

As can be seen more clearly in the enlarged partial fragmentary, cross-sectional, side elevational views of FIGS. 6 and 8, the retaining means attachment zone 38 on the tubular body 22 includes both the annular groove 54 and the annular ridge 60. The annular groove and annular ridge 54,60 are positioned on the tubular body towards the fiber entry end 48. As shown in FIGS. 6 and 8, the annular ridge 60 is formed between the groove 54 and the entry end 48. The position of the annular ridge 60 provides positive locating of the retaining ring and generally limits the axial placement of such a retaining ring 28.

With further reference to FIGS. 6 and 8, it can be seen that the first diameter 164 of the tubular body is less than a second diameter 166 of the tubular body 22 measured between the outside surfaces of the annular ridge 60. The difference between the diameters 164,166 allows the retaining ring 28 to be positively positioned and engaged on the outside surface 56 of the wall 42 in an area of the retaining means attachment zone 38 having a diameter generally equal to the first diameter 164.

It should also be noted, that the inside diameter 168 of the retaining ring 28 shown in the figures is slightly smaller than the first outside diameter 164 of the tubular body 22. This is so that there is a friction fit between an inside edge 17' of the retaining ring 28 and the first outside surface 56 of the wall 42. In fact, when the retaining ring 28 is attached to the tubular body 22 the inside edge 17' tends to scuff or scive the outside surface 56 which increases the frictional fit between the retaining ring 28 and the tubular body 22. Additionally, the retaining means attachment zone 38 may be formed with the annular ridge 60 forming one wall 72 of the walls 72,73 defining the annular groove 54. This feature allows the structures different retaining rings to be positioned in approximately the same location with sufficiently little axial difference between the two different types of rings.

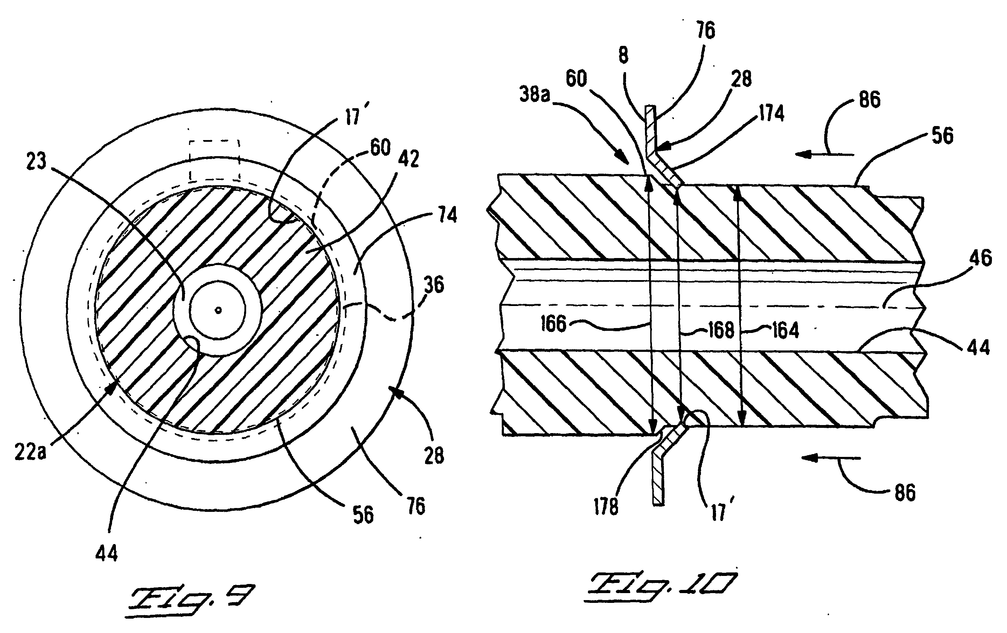

With regard to the retaining ring 28 as shown in FIGS. 2 and 7-10, the retaining ring 28 includes an inner rim portion 174 and an outer flange portion 76. The inner rim portion 174 is formed at an angle relative to the central axis 46. The annular ridge 60 is formed with an approximately corresponding chamfer 178. The angle or offset structure created by the angled inner rim portion 174 of the retaining ring 28 helps to minimize the axial differential distance between the surfaces 8 on the friction fitting ring and a corresponding surface 9 on the C-ring, which surfaces are abutted by the inner flange 32 of the nut 30. By minimizing the axial differential distance between the surfaces 8,9, the biased location of the nut 30 is similar regardless of the type of coupling nut retaining means 40 which is used.

In use, the C-ring 52 is attached in a radial direction (as indicated by arrow 84 in FIG. 5) whereas the retaining ring 28 is attached in an axial direction (as shown by direction arrow 86 in FIG. 8). The C-ring 52 is positioned into the groove 54 by positioning the C-ring 52 in alignment with the annular groove 54 of the tubular body 22 between a gap 88 defined between opposed open ends 90 of the C-ring 52 The C-ring 52 is pressed towards the annular groove 54 so that the opposed ends 90 deflect, momentarily, slightly outwardly to allow the body to pass therebetween whereupon the C-ring engages the groove.

The retaining ring 28, on the other hand, being a solid circular ring, is conducive to automated application in the axial direction 86. The tubular body 22 is oriented to project through an aperture 168 defined between the inside edge 70 of the inner rim portion 174 of the retaining ring 28 A force is applied to the retaining ring 28 in the axial direction 86.

With reference to FIGS. 4, 9 and 10, the elements of the structure which are identical to those as shown in FIGS. 1-3 and 5-8 are identified with the same reference numeral whereas alternate forms of the structure are shown with a corresponding reference numeral with the addition of an alphabetic suffix. As shown in FIGS. 4, 9 and 10, the tubular body 22a includes a retaining means attachment zone 38a. The retaining means attachment zone 38a does not accommodate a radially attached retaining ring and only accommodates an axially attached retaining ring. The axially attached retaining ring 28 is the solid annular friction fitting retaining ring 28 as shown in FIGS. 7 and 8. The retaining ring 28 is axially positioned over the outside surface 56 of the tubular body 22a in close spacing next to the ridge 60. The ridge 60 as shown in FIGS. 4, 9 and 10 is an increased diameter portion of the body 22a as will be described in greater detail hereinbelow. The retaining means attachment zone 38a on the tubular body 22a is positioned towards the entry end 48 and includes the ridge 60.

A first diameter 164 of the tubular body 22a is less than a second diameter 166 of the tubular body 22a measured between the outside surfaces of the ridge 60. The inside diameter 168 of the retaining ring 28 is slightly smaller than the first outside diameter 164 of the tubular body 22a. The dimensional difference between the inside diameter 168 of the retaining ring 28 and the outside diameter of the tubular body 22a provides a friction fit between an inside edge 17 of the retaining ring 28 and the outside surface 56 of the wall 42. When the retaining ring 28 is attached to the tubular body 22a the inside edge 17' tends to scuff or scive the outside surface 56 which increases the frictional fit between the retaining ring 28 and tubular body 22. The differences between the diameters 164, 166 allows the retaining ring 28 to be positively positioned and engaged on the outside surface 56 of the wall 42 in the retaining means attachment zone 38a.

With reference to the exploded perspective view as shown in FIG. 19, the connector 20 includes a first generally elongated body 22, biasing means 26, a second body 24 shown herein as a coupling nut, and coupling nut retaining means 40 shown herein as a continuous retaining ring 28. A longitudinal axis 46 is defined along the direction of elongation of the elongated body 22. Each of the components 22, 24, 26, and 28 are oriented and assembled along the longitudinal axis 46. Additionally, as it will be described in greater detail hereinbelow, the connector 20 is assembled with exposed areas which promote inspection of the assembled article using the inspection system of the present invention to determine whether or not the article is properly assembled.

With reference to FIG. 2, it should be noted for purposes of clarification, that a first width dimension 144 is defined between outside surfaces 46 of the elongated body 22. A second width dimension 148 is defined between outside surfaces of the coupling nut 26. The first width dimension 144 is generally measured at the shoulder 36 of the elongated body 22. The shoulder end of the elongated body is generally referred to as an optical fiber connecting end or the first free end 50 of the connector 20 while the opposite end of the elongated body 22 is referred to as the optical fiber entry end or second free end 48.

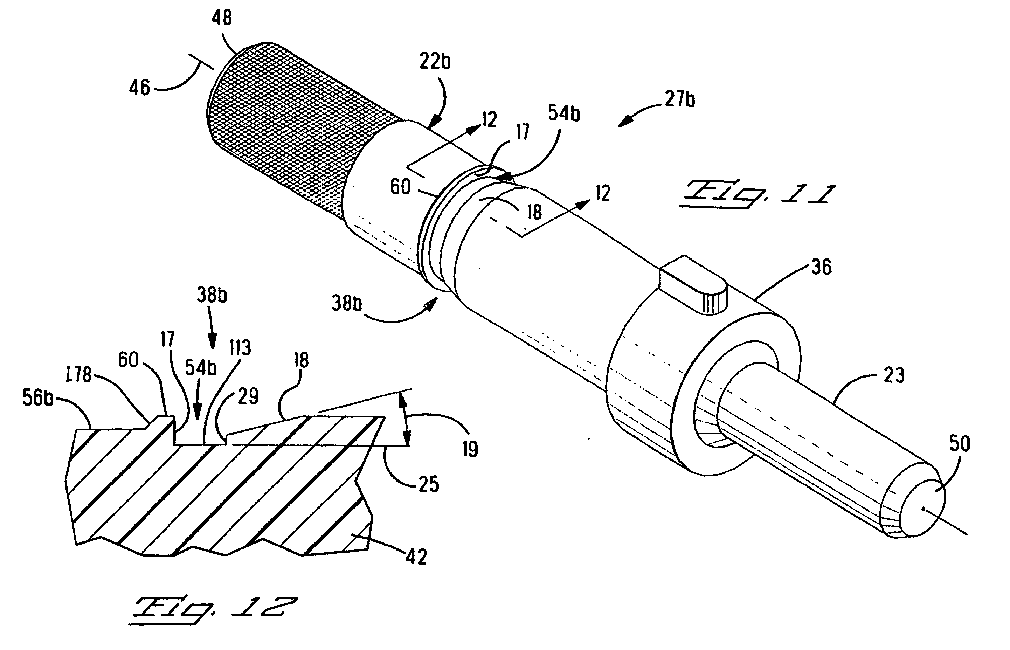

The elongated body 27b as shown in FIGS. 11-18 includes a retaining means attachment zone 38b on the tubular body 22b. The retaining means attachment zone 38b accommodates either a radially attached retainer or retaining ring or an axially attached retainer or retaining ring. The axially attached retaining ring 28 is the solid annular friction fitting retaining ring 28 as shown in FIGS. 7 and 8 and the radially attached retaining ring is the C-ring 52 as shown in FIGS. 5 and 6. The retaining means attachment zone 38b on the tubular body 22b is positioned towards the entry end 48 and includes the ridge 60.

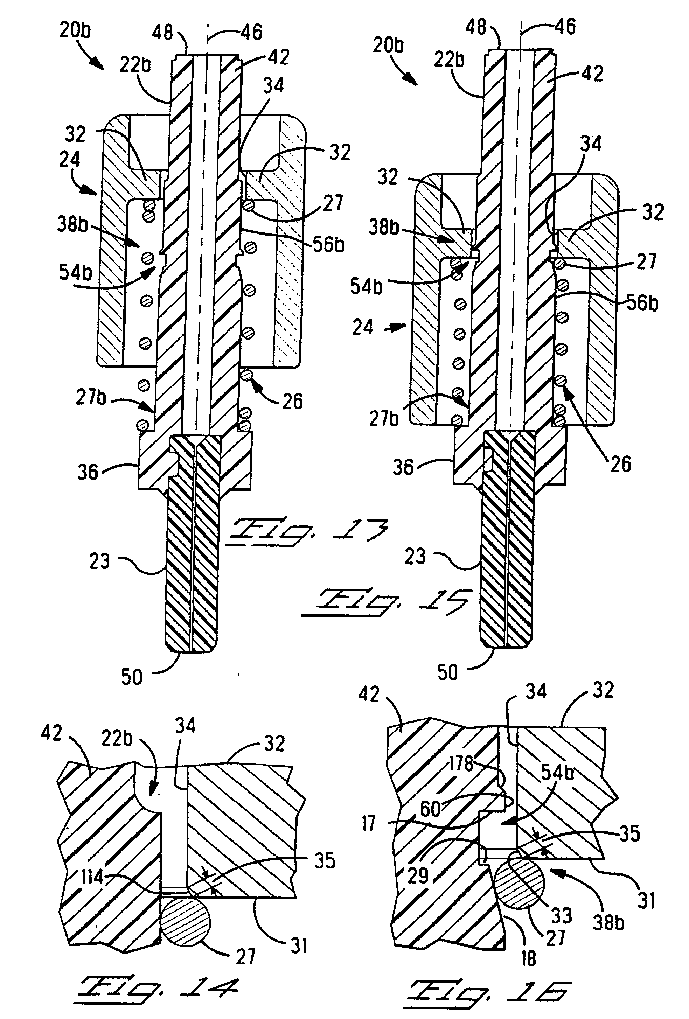

An alternate embodiment of the present invention is shown in FIGS. 11-18. In this embodiment,the retaining means attachment zone 38b is configured for accepting a retainer on the tubular body 22b and preventing the biasing means 26 from being caught between the outside surface 56b of the tubular body 22b and an inside surface of the aperture 34b of the coupling nut 24. FIGS. 13, 15 and 17 show a tubular body 22b with biasing means 26 positioned thereon and a coupling nut 24 positioned for compressing the biasing means against the shoulder 36. FIGS. 13, 15 and 17 provide progressive views showing the biasing means 26 in advancing stages of compression between the coupling nut 24 and tubular body 22b. The enlarged views as shown in FIGS. 14, 16 and 18 (corresponding to FIGS. 13, 15 and 17, respectively) show enlarged views of a trailing coil 27 of the biasing means 26 which abuts a surface 31 of the flange 32 of the coupling nut 24 and an outside surface 56b of the tubular body 22b in the area surrounding the retainer attachment zone 38b and in the retaining means attachment zone 38b.

With reference to FIGS. 11 and 12, the retainer attachment zone 38b includes a first wall 17 and a second wall 18 formed in the outside surface 56b of the tubular body 22b. The first and second walls 17, 18 define the annular groove 54b. The retainer attachment zone .38b including the annular groove 54b is intermediately positioned along the tubular body 22b generally in a plane perpendicularly oriented relative to the central axis 46. The first wall 17 is spaced from the optical fiber entry end 48 with the second wall 18 being positioned between the first wall 17 and the optical fiber connecting end 50. As shown in the enlarged cross-sectional view of FIG. 12, the second wall 18 is a sloped surface spaced in close proximity to and generally facing the first wall 17. An angle 19 is formed between the sloped surface 18 and a reference 25 which is substantially parallel to the central axis 46.

With reference to the description provided hereinabove, an annular ridge 60 is provided in the retaining means attachment zone 38b with one wall of the ridge 60 being formed by the first wall 17. An opposite surface or chamfer 178 of the ridge 60 is angled. The ridge 60 is positioned on the tubular body 22b to limit the axial travel of an axially attached retaining ring. It should be noted that the ridge 60 is not used as a stop for the axially attached retaining ring in all assemblies. Rather, the ridge limits the travel of an axially attached ring which otherwise might be positioned too far away from the fiber optic entry end as the result of changes in component tolerances or the operating tolerances of apparatus which automatically attach axially attached retaining rings.

The retaining attachment zone 38b may also be configured to include a third wall or ledge 29 positioned between the sloped surface 18 and the first wall 17 oriented generally perpendicular to the central axis 46. The ledge 29 provides a retaining surface in the annular groove 54b for positioning a C-ring retained in the annular groove 54b to prevent movement of the C-ring towards the optical fiber connector end 50 and away from the first wall 17. The ledge 29 projects generally perpendicularly away from a face 113 of the annular groove 54b which extends between the first wall 17 and the ledge 29. The ledge 29 projects from the face 113, a dimension which is sufficient to retain the C-ring but not impede movement of a trailing end coil 27 through the groove 54b.

Turning now to FIGS. 13-18 for a more detailed discussion of the problem found in prior art devices and the solution provided by the present invention. FIG. 13 shows the initial steps of assembly of the optical fiber connector 20b in which the biasing means 26, shown here as coiled spring, is axially aligned and positioned over the tubular body 22b and positioned against the shoulder 36. The coupling nut 24 is positioned with the tubular body 22b extending through the aperture 63 and with the flanges 32 positioned on the trailing coil 27 of the spring 26.

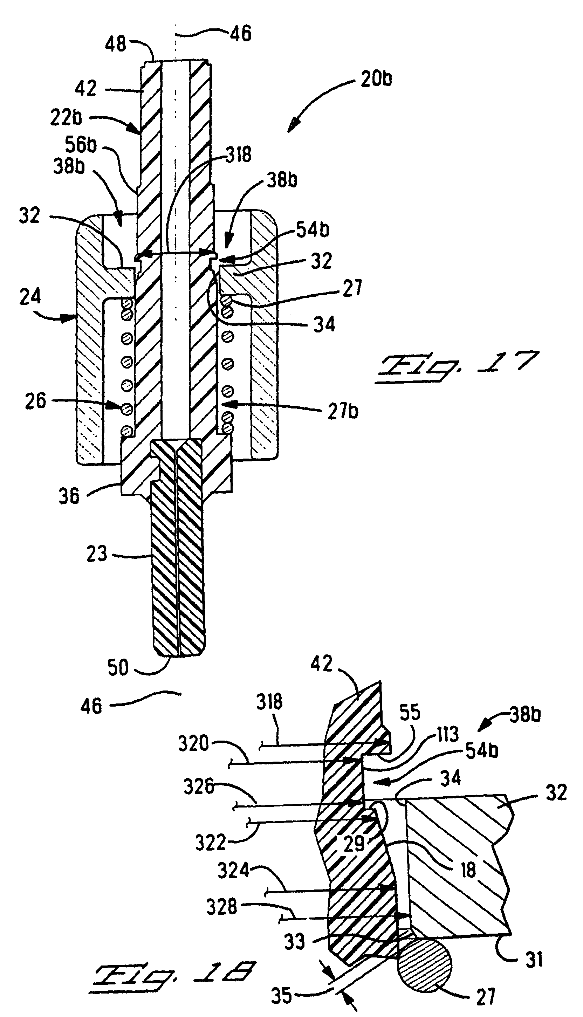

Next, as shown in FIG. 15, the coupling nut 24 must be positioned downwardly along the central axis 46 to expose the retainer attachment zone 38b so that a retainer may be positioned on the tubular body 22b thereby retaining the assembly in a final configuration. During the step as shown in FIG. 15, the spring 26 is compressed between the flanges 32 and the shoulder 36. While being compressed, the spring may move relative to the central axis 46 such that the trailing end coil 27 shifts into the annular groove 54b.

The trailing end coil 27 slides over the chamfer 178 of the annular ridge 60 and then may shift inwardly into the annular groove 54b along the first face 104. A leading edge 33 of the flange 32 is formed as a. beveled surface having a width dimension 35 which is small enough so as to continue to maintain contact with the trailing end coil 27 thereby continuing to urge the coil downwardly towards the sloped surface 18. As shown in the enlarged view of FIG. 16, the present invention prevents a trailing end coil 27 which shifts into the annular groove 54b from being trapped between the tubular body 22b and the coupling nut 24. The present invention promotes the movement of the spring 26, particularly the trailing end coil 27 thereof, along the outside surface 56b of the tubular body 22b.

When a trailing end coil 27 shifts into the groove 54b during spring compression, the trailing end coil 27 is moved out of the groove upon continued downward movement of the coupling nut 24. The continued downward movement or compression of the spring 26 results in the trailing end coil 27 being forced downwardly and out of the downward side of the annular groove 54b along the sloped surface 18. Since the sloped surface 18 generally merges with the outside surface 56b of the tubular body 22b, the trailing end coil 27 travels out of the groove 54b without being caught between the outside surface 56b of the tubular body 22b and the aperture 34 in the coupling nut 24. The ledge 29 is sized and dimensioned so as to provide the benefits of retaining a C-ring in the annular groove 54b without interfering with the movement of a trailing end coil 27 out of the annular groove 54b.

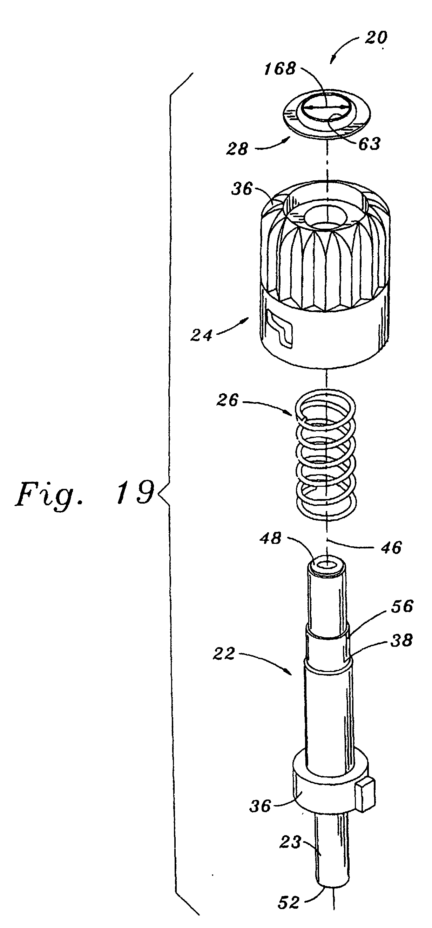

As shown in FIGS. 17 and 18 continued downward movement of the coupling nut 24 results in exposing the retainer attachment zone 38b for attachment of a retainer thereto, either an axially attached retainer or a radially attached retainer. As shown in FIG. 18, continued downward movement of the flange 32 continues to force the trailing end coil 27 out of the annular groove 54b preventing the trailing end coil 27 from being lodged therein.

In defining the retainer attachment zone 38b as claimed in the present invention, it is important to understand the nature of the sloped surface 18 as discussed hereinabove and to further understand the general principles. In this regard, further description of the retainer attachment zone 38b is provided with reference to FIGS. 17 and 18 which describe the pertinent surfaces by way of diameters relative to the tubular body 22b. In the description of FIG. 18, it should be understood that the described diameters define dimensions which extend across the tubular body 22b in a plane generally perpendicular to the central axis 46.

Generally, the first wall 17 and the sloped surface 18 formed in the wall 42 of the tubular body 22 define the annular groove 54b. The wall 42 has a first diameter 318 in an area between the optical fiber entry end 48 and the retainer attachment portion 38b. The retainer attachment portion 38b has a second, third and fourth diameter 320, 322, 324, respectively. The second diameter 320 being measured along the tubular body 22b spaced from the first diameter 318 towards the optical fiber connecting end 50. The second diameter 320 is smaller than the first diameter 318. The third diameter 322 is spaced from the second diameter 320 towards the optical fiber connecting end 50 with the third diameter 322 being equal to or greater than the second diameter 320. The fourth diameter 324 is spaced from the third diameter 322 towards an optical fiber connecting end 50 and has a dimension which is greater than the dimension of the third diameter 322. The area between the third diameter 322 and fourth diameter 324 generally defines the sloped surface 18.

Defining the retainer attachment zone 38b in this manner helps to show the breadth of the present invention based only on generally required diametric relationships of the surfaces and not the actual final topography of the retainer attachment zone 38b. In this regard, the sloped surface 18 may be a generally linear slope as well as a slope having an arcuate surface or any other feature which helps to promote the continued movement of the trailing end coil 27 of the spring 26 out of the annular groove 54b so as to prevent it from being trapped therein.

It should also be noted that the annular groove 54b may be configured to include a fifth diameter 326 which is spaced between the second diameter 320 and the third diameter 322. The fifth diameter 326 is greater than or equal to the second diameter 320 but is also less than or equal to the third diameter 322. In this regard, the fifth diameter 326 defines the ledge 29 in the annular groove 54b where the fifth diameter 326 is less than the third diameter 322, and the second diameter 320 is less than or equal to the fifth diameter 326. In a configuration where a ledge 29 is not required, the second diameter 320, third diameter 322, and fifth diameter 326 are all equal, resulting in a sloped surface 18 without a ledge 29 between the sloped surface 18 and the first wall 17. As an additional matter, while defining structures by way of diameters, it should be understood that the aperture 34 has an internal diameter 328 which is greater than all of the first-fifth diameters, 318-326, respectively, defining the retainer attachment zone 38b so as to allow the nut body 24 to be moveable along the tubular body 22b relative to the retainer attachment zone 38.

Turning now to FIGS. 19 - 24, a process and apparatus 64 of the present invention is described. The apparatus 64 includes a fixture or nest 66 which is operatively associated with indexing means 68. The indexing means 68 is shown in FIGS. 18-20 as a table or platform having a stationary portion 69 and a rotary dial 71 operatively attached thereto. The indexing means is of known construction to controllably index the nests 66 attached along the perimeter of the rotary dial 71. The elongated body 22 is positioned in the nest 66 for assembly of the connector 20. The indexing means 68 advances the nest 66 to a number of stations comprising the apparatus 64. The stations, described hereinbelow, are positioned in close proximity to one another in a circular arrangement for minimizing the travel distance, travel motion, and travel time of the nest between stations for increasing through put of the apparatus. The nest 66 retains the elongated body 22 in a selected orientation for assembly of the components 24,26,28 during the assembly process and for inspection after the connector 20 is assembled. Each of the stations is operatively interfaced with the indexing means 68 and a controller 67 to deliver a component to the elongated body positioned in the nest 66 and/or carry out an action on the connector 20.

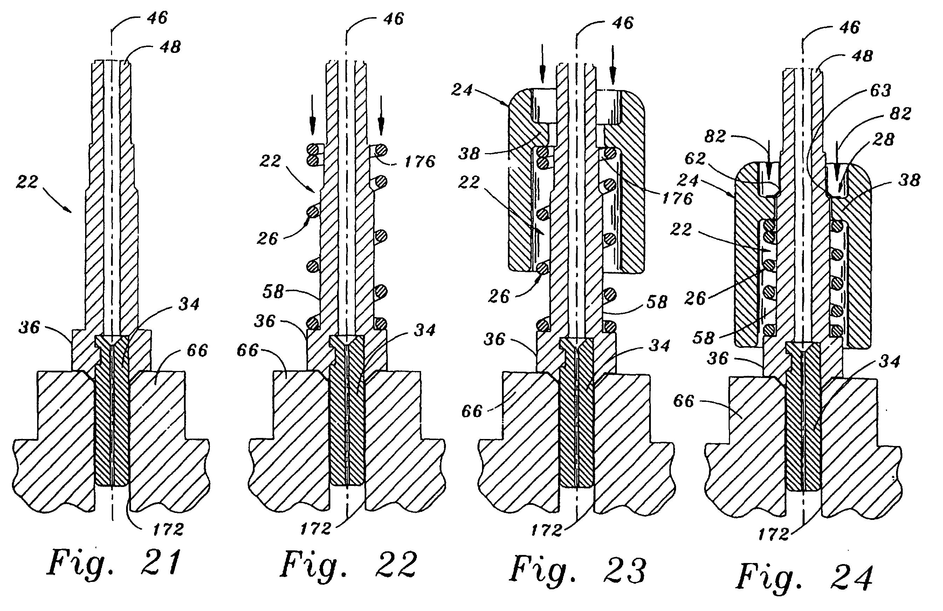

The nest 66 is first indexed in position to receive an elongated body 22 from a body placement station 70. As shown in FIG. 21, the ferrule 23 is inserted into a correspondingly dimensioned bore 172 formed in the nest 66. The bore 172 is axially aligned for coaxially receiving the elongated body 22 along the longitudinal axis 46. Once the elongated body 22 is placed, the indexing means 68 indexes the nest 66 to a biasing means placement station or spring placement station 74. The biasing means 26 as shown in FIGS. 21-24 is a coiled spring. As shown in FIG. 22, the coiled spring 24 defines a passage 176 which is coaxially aligned with the longitudinal axis 46 allowing the spring 26 to be positioned over the exposed free end 48 proximate to the outside surface 56 of the elongated body 22. The spring 26 is limited in its downward axial movement by the shoulder 36. After the spring 26 is positioned on the elongated body 22, the nest 66 is indexed to a nut placement station 78. As previously described, the coupling nut 24 includes a bore 34 which is coaxially aligned with the longitudinal axis 46 and positioned over the free end 48 of the elongated body 22 such that the flanges 32 abut the spring 26. This assembly state is shown in FIG. 23.

Once the coupling nut 24 is placed on the cumulative assembly, the nest 66 is indexed to a retaining means mounting station 80. With reference to FIG. 24, the retaining ring 28 is positioned with the aperture 63 coaxially aligned with the longitudinal axis 46. The ring 28 is downwardly displaced along the longitudinal axis 46. Application of the retaining ring 28 over the exposed free end 48 results in engagement between the inner edge of the aperture 63 with the outside surface 56 of the elongated body 22. One of the objectives satisfied by the present invention is to position the coupling nut 24 and retain it by way of the retaining ring 28 such that the spring 26 is maintained in a compressed state between the coupling nut 24 and the shoulder 36. To this end, the coupling nut 24 can be displaced before the application of the retaining ring 28 so that the retaining ring 28 is axially driven to the prepositioned location of the coupling nut 24. The retaining ring 24 can also be driven in a manner such that the coupling nut 26 is simultaneously driven with the retaining ring 28 by forces (as indicated by reference arrows 82) acting on the retaining ring 28.

As will be described in greater detail hereinbelow, an inspection system is provided at an assembly inspection station 84 to determine whether the connector assembly 20 which is positioned proximate thereto is properly assembled. The nest unloading station 16 operates in response co the results of the inspection station 84 to determine whether the assembled article 20 is "good" or "bad", in other words, properly or improperly assembled, respectively. The nest unloading station 16 selectively moves proper connectors 20 to a "good" location 14 and improper connectors 20 to a "bad" location 15.

After the nest 66 is unloaded by the nest unloading station 16, the nest 66 is then indexed by the indexing means 68 to a nest inspection station 94. The nest inspection station 94 is a precautionary measure to assure that the nest 66 is unloaded so that when the nest 66 is advanced to the body placement station 70, it is prepared to receive the next elongated body 22 for assembly. It should be noted that the indexing means 68 can operate with a nest 66 at each of the stations so that each station is performing an operation generally simultaneously.

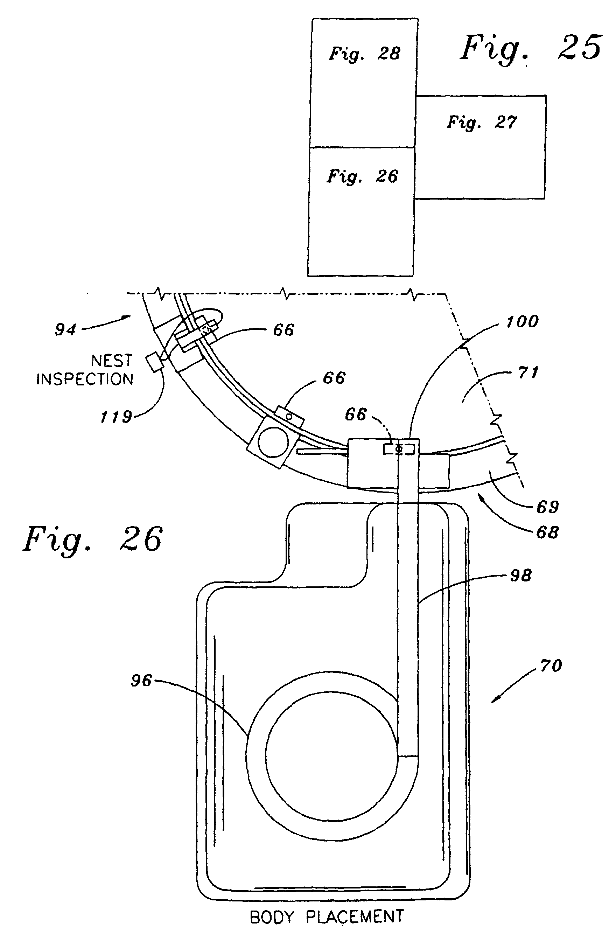

FIGS. 26-28 are a grouping of drawings which are arranged as shown in FIG. 25, to illustrate the apparatus 64 in greater detail. For example, the body placement station 70 as shown in block diagrammatic form in FIG. 26 is illustrated with a vibratory bowl 96 and feeder track 98 of known construction. A placement device 100 of known construction, serves a properly oriented elongated body 22 to a correspondingly positioned nest 66. The bowl 96 and track 98 are of known construction such as is produced by Performance Feeders of Oldsmar, Florida. Numerous bodies 22 are retained in the bowl 96 and feed to the track 98 which includes a series of orienting structures to deliver each body in a selected orientation for receipt by the placement device and positioning in the nest 66.

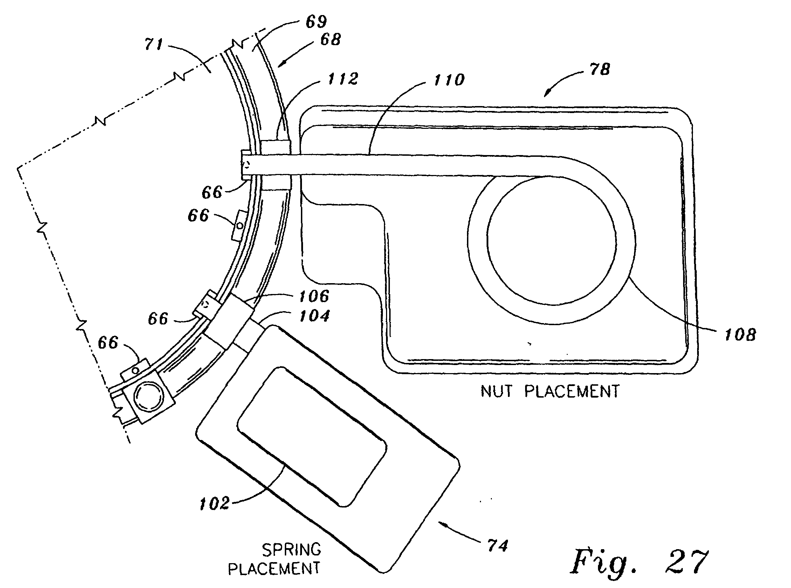

Moving to the drawing sheet identified as FIG. 27, the nest 66 advances to the spring placement station 74 which utilizes an air jet feeder 102 of known construction connected to a delivery tube 104. A delivery device 106 of known construction selectively drops or deposits an axially oriented spring 26 over the exposed end 48 of the elongated body 22. The air jet feeder 102 is of known construction such as the type produced by Becher Air Components of New Preston, Connecticut.

The nut placement station 78 includes a vibratory bowl feeder 108 and a correspondingly nut orienting track 110 of known construction such as produced by Performance Feeders of Oldsmar, Florida. A nut delivery device 112 of known construction receives a properly oriented coupling nut 24 from the track 110 and delivers the nut 24 over the exposed end 48 of the elongated body 22.

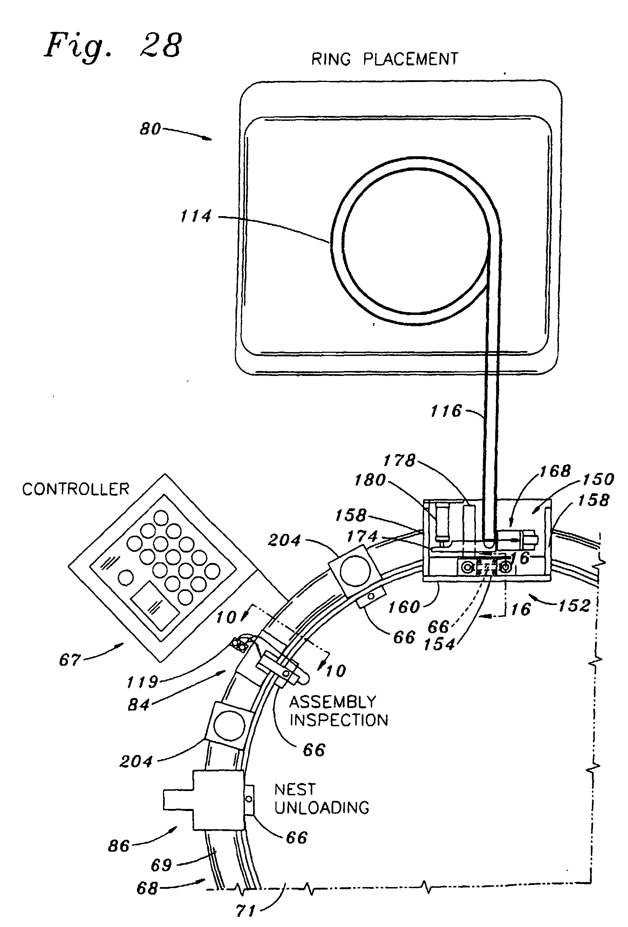

Progressing now to the drawing sheet identified as FIG. 28, the nest 66 is indexed to the ring placement station 80. The ring placement station 80 includes a vibratory or gravity bowl feeder 114 which serves retaining rings 28 to an orienting track 116. The bowl feeder 114 and track 116 are of known construction such as produced by Performance Feeders of Oldsmar, Florida. The track 116 serves retaining rings 28 to a ring escapement assembly 118 which will be described in greater detail hereinbelow. The ring escapement assembly 118 delivers and applies a retaining ring over the exposed free end 48 of the elongated body 22. The ring escapement assembly 118 also drives the retaining rings 28 axially along the longitudinal axis 46 and simultaneously displaces the coupling nut 24 to a desired position along the longitudinal axis 46 thereby compressing the spring 26 between the shoulder 36 and the flanges 32.

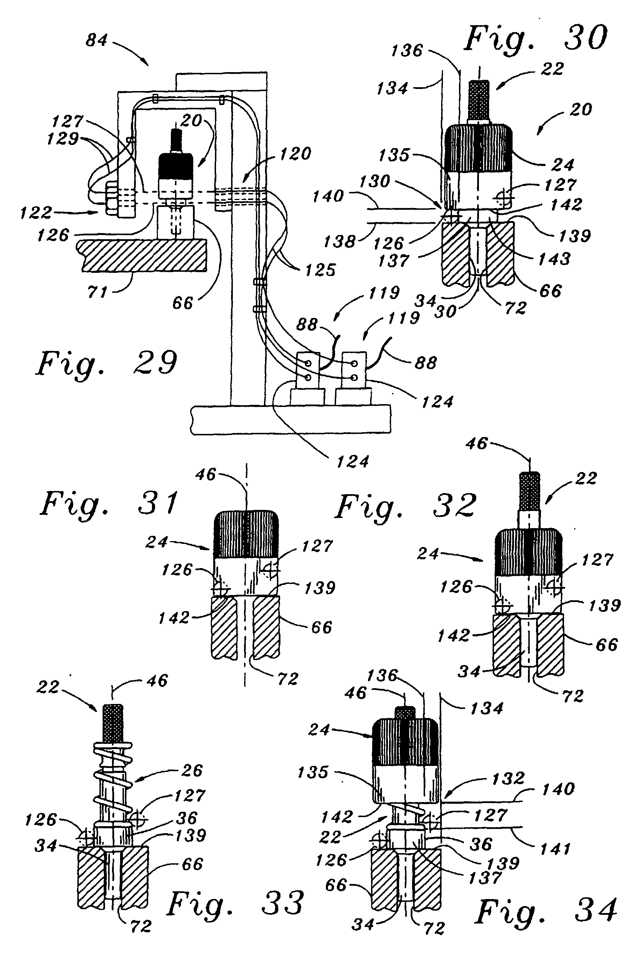

Next, the nest 66 is advanced to the inspection station 84. The inspection station 84 is shown with greater detail in the partial fragmentary, cross-sectional side elevational view as shown in FIG. 29. The inspection station 84 includes a beam inspector assembly 119 having emitter means 120 and detector means 122. The emitter 120 is positioned on one side of the connector 20 travelling in the nest 66 and the detector 122 is positioned on the opposite side of the nest 66 facing the emitter 120. The beam inspector assembly 119 is generally of known construction such as is produced by Omron Corp. USA of Schaumburg, Illinois. The assembly 119 includes a transmitter/receiver unit 124 which has a light source for transmitting light over a optical fiber cable 125 to the emitter/detector pair.

A first beam 126 is produced between a lower emitter and detector pair 120,122 and a second beam 127 is produced between an upper emitter and detector pair. The detector is similarly connected via an optical fiber cable 129 to carry the light sensed from the emitter to the transmitter/receiver unit 124. As shown in FIG. 29, a pair of beam inspector assemblies 119 are used to sense two separate sites relative to the connector 20.

An output signal from the assemblies 119 is communicated to the nest unloading station which selectively moves the properly or improperly assembled connectors to a corresponding "good" location 14 or a "bad" location 15. The nest is once again indexed to the nest inspection station 94 to verify whether the nest 66 has been emptied.

To further clarify the inspection system of the present invention, reference is made to FIGS. 29-34. The inspection system inspects for the proper or improper assembly of the connector 20. The inspection system operates using only two beams 126, 127 to test for at least five states of the connector 20 shown herein as the optical fiber connector. With reference to FIG. 29, the emitters 120 are positioned so that the first beam 126 will follow a path through a first detecting area 130 (see FIG. 30) and the second detector will produce the second beam 127 falling in a second detecting area 132 (see FIG. 34). As shown in FIG. 30, the first detecting area 130 is defined between a plane 134 generally parallel to the axis 46 and passing tangential to an outside surface 135 of the nut body 24 and a plane 136 passing along the outside surface 137 of the elongated body 22, a plane 138 bounded by an upper surface 139 of the nest 66, and a plane 140 defined by an opposing rim edge 142 of the nut 24. In a properly assembled connector 20, the first beam 126 will pass through the first detecting area 130 and fall upon the corresponding detector 122. The first detecting area 130, therefore, passes along an exposed portion 143 of the elongated body 22 and does not block the coupling nut 24 or the nest 66.

With reference to FIG. 34, the second detecting site 132 is defined between the plane 134 along the outside surface 135 of the coupling nut 24, the plane 136 along the outside surface 137 of the elongated body 22, the plane 140 defined by the rim edge 142 of the coupling nut 24 and a plane 141 bounded generally by the upper surface of the shoulder 36. It is important that the beam path 127 be positioned near the edge of the plane 141 towards the nest 66 to detect the position of the coupling nut 24 in a properly assembled connector 20 (see FIG. 30).

We now turn to FIGS. 31-34 to show the alternate conditions of an improperly assembled article and how such an improperly assembled article is detected by the two beam inspection assemblies 119. In FIG. 31, the connector 20 is assembled without an elongated body 22. As such, the rim edge 142 of the coupling nut 24 rests against the upper surface 139 of the nest 66. In this condition, the first beam 126 passing through the first detecting site 130 is broken and not sensed by the corresponding detector. This condition indicates that the connector 20 is improperly assembled.

A similar condition is sensed in the improperly assembled connector 20 as shown in FIG. 32. In FIG. 32, the connector 20 has been assembled without a spring 26 and therefore the rim edge 142 of the nut is allowed to travel downwardly along the elongated body 22 and rest upon the upper surface 139 of the nest 66. Since the first beam 126 passing through the first detecting site 130 is broken, the inspection means 84 senses an improperly assembled connector 20.

FIGS. 32 and 34 show improperly assembled connectors 20 which result in the second beam 127 passing through the second detecting site 132. With reference to the discussion hereinabove, the inspection means 84 identifies a connector 20 as being properly assembled if the first beam 126 is allowed to pass through the first detecting site 130 and the second beam 127 is broken in the second detecting site 132. With this in mind, the connector 20 as shown in FIG. 32 is a improperly assembled without a nut 24 and as such, the second beam 127 is allowed to pass through the second detecting site 132 thereby indicating an improperly assembled connector 20. Similarly, the connector 20 as shown in FIG. 34 has been improperly assembled without a retaining ring 28 and therefor the spring 26 is not retained in compression between the nut 24 and the shoulder 36. In this condition, the nut 24 is displaced upwardly along the body 22 and therefore does not block the second beam 127 passing through the second detecting site 132. Since the second beam 127 passes through the second detecting site 132, the inspecting means 84 identifies this as improperly assembled connector.

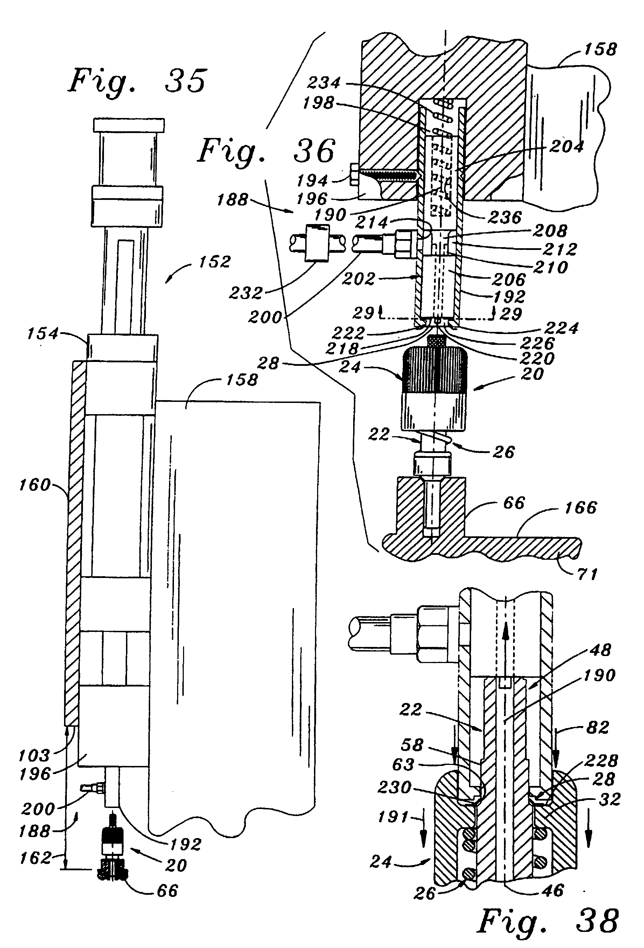

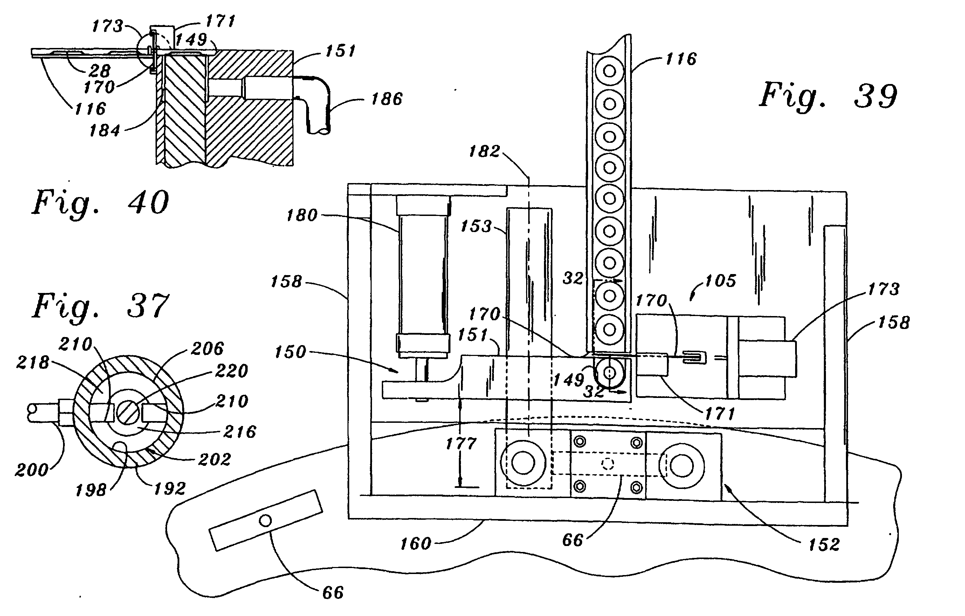

With reference to FIGS. 28 and 35-40, the retaining means mounting station 80 is shown and includes the feeder 114 and track 116 which deliver retaining rings to a ring locating means 150 for attachment to a connector retained in a nest by ring applying means 152. In the interest of clarity, the feeder 114 and track 116 are only fully shown in FIG. 28 with fragmentary portions of the track illustrated in FIGS. 39 and 40. The ring locating means 150, shown in plan view in FIG. 28 and in the enlarged plan view of FIG. 39, operates to horizontally position a ring relative to a corresponding nest. Ring applying means 152, shown in a plan view in FIG. 28 and partial fragmentary, side-elevational views in FIGS. 35, 36 and 38 operates to capture a ring from the locating means 150 and vertically position and apply the ring on the connector retained in the nest. The ring applying means 152 includes driving means 154 shown herein as a vertically oriented ram of known construction.

Two vertically aligned, spaced-apart support structures 158 are attached to the stationary portion 69 of the indexing means 68. A cross member 160 extends between the vertical support members 158. A clearance space 162 is defined between a lower edge 103 of the cross member 160 and a top surface of the dial 71. The dial 71 rotates through the space 162 to position a nest and a connector 20 positioned thereon relative to the ring applying means 152 for applying a retaining ring to the connector 20.

With reference to FIG. 28, retaining rings are fed from the vibratory bowl 114 through the track 116 which arranges the retaining rings in a desired orientation through techniques and structures known in the art. As shown in FIG. 39, a gate assembly 105 is positioned between an end 170 of the track 116 and the locating means 150. The gate assembly 105 includes a shim gate 170 which reciprocates along a guide 171 in front of the track 116 by means of a dual acting cylinder 173. The gate assembly 105 controllably restricts the movement of retaining rings from the vibratory track 116 to the locating means 150. The locating means 150 includes a shuttle body 151 having a recess 149 formed therein which is sized and dimensioned for receiving a retaining ring.

With reference to FIG. 40, the track 116 is vibrated to promote the advancement of the retaining rings towards the shuttle 151. When the gate 170 is retracted by the dual acting cylinder 173, the first ring in the queue in the track 116 will advance into the recess 149 for horizontal positioning relative to and for subsequent capture by the applying means 152. The cylinder 173 then cycles to return the gate to a position between the first ring, now located in the recess 149, and the second ring in the queue so as to retain the rings in the queue.

Having fed a ring to the shuttle 149, it can be seen in FIG. 39 that the shuttle 151 of the locating means 150 is operable to horizontally position (as indicated by arrow 177) the retaining ring relative to the nest 66. The shuttle 151 is moved (177) by a dual acting cylinder 180, this movement (177) is axially constrained by a guide bearing 153. The guide bearing 153 restricts the movement of the shuttle 151 along a central axis 182 so that precise repeatable locating can be achieved by the operation of the cylinder 180 for dependable placement of the retaining rings relative to the applying means 152.

As shown in FIG. 40, an annular vacuum orifice 184 communicating with the recess 149 allows a vacuum line 186 to draw a vacuum on the recess 149 and thereby retain the ring on the shuttle 151. (The vacuum line 186 is not shown in FIG. 39 in the interest of clarity.) This vacuum orifice 184 prevents the ring positioned on the shuttle 151 from becoming displaced in the recess 149. The shuttle 151 is advanced to a position underneath the applying means 152 whereupon a ring applying head 188 produces forces which lift the ring from the shuttle and retain the ring on the head 188 for vertical placement onto a connector 20. With reference to FIGS. 35, 36 and 38 the head 188 retains a ring for placement over the free end 48 of a connector 20 retained in a nest 66 therebelow. The drive means 154 vertically downwardly displaces the head 188 during the applying process (see FIG. 38).

A preferred embodiment of the applying head 188 creates a vacuum force to lift the ring off of the shuttle 151 which is precisely positioned immediately below the head 188. Further details with regard to the vacuum operated embodiment as shown herein will be provided hereinbelow. In an alternate embodiment, a magnetic head may be used to capture the ring from the shuttle and retain the ring for vertical displacement onto a connector. As shown in FIGS. 36 and 38, in either embodiment, the ring is retained on the head 188 and applied by the applying means 152 onto the connector 20. The head 188 is axially advanced along a central axis 190 generally coaxial with the axis 46 of the connector 20. The ring is downwardly displaced over the free end 48 of the elongated body 22.

As shown in FIG. 38, the aperture 63 of the retaining ring 28 is positioned over the free end 48 of the elongated body 22. The retaining ring 28 is moved downwardly along the outside surface 56 of the elongated body 22. As the head 188 is downwardly advanced (as indicated by arrows 82) toward the coupling nut 24, the ring 28 abuts the inner flanges 32. Further driving of the head along the central axis 190 drives (as indicated by arrows 191) the coupling nut 24 downwardly thereby compressing the spring 26. The head is retracted after applying the retaining ring 28 to the body 22, with the frictional forces between the inner rim of the aperture 63 and the outside surface 56 of the body 22 dislodging the ring from the head 188.

As disclosed hereinabove, the preferred embodiment of the head 188 employs vacuum forces to pick up the ring from the shuttle 151. The vacuum operated head 188 is shown in greater detail in FIG. 36-38. With reference to FIG. 36, the vacuum head 188 includes a sleeve 192 which is retained by a set screw 194 on a head body 196. The sleeve 192 has a hollow cavity 198 which communicates with a vacuum line 200. An axially displaceable vacuum plunger 202 is positioned in the cavity 198 within the sleeve. The vacuum plunger 202 includes a trailing portion 204, a leading portion 206 and a tapered portion 208 positioned between the leading and trailing portions 206, 204. Channels 210 are formed through the tapered portion 208 and the leading portion 206 generally parallel to the central axis 190. The channels 210 communicate with an annular gap 212 formed between the tapered portion 208 and an inside surface 214 of the sleeve 192. The channels 210 run towards the leading portion 206 and communicate with a recess 216 formed in a face 218 of the leading portion 206. A protruding tip 220 extends from the recess and projects into a correspondingly positioned aperture 222 formed in the protruding end 224 of the sleeve 192.

The aperture 222 and the tip 220 are sized and dimensioned such that a gap 226 is formed between the outside surface of the tip 220 and the inside surface of the aperture 222. This gap 226 communicates with the recess 216 and channels 210 to induce a vacuum therethrough. An annular counterbore 228 is formed in the protruding end 224 of the sleeve 192. When the vacuum is activated, a ring positioned thereunder on the shuttle 151 is lifted from the shuttle onto the sleeve 192. When positioned against the protruding end 224, an extending portion 230 of the ring is received in the counterbore 228 with the tip 220 positioned for protruding through the aperture 63 in the ring. The portion of the ring surrounding the aperture 63 is drawn against the sleeve under the influence of the vacuum.

A vacuum sensor 232 on the vacuum line 200 senses whether or not the vacuum has changed. Since the vacuum force is a generally consistent force, the force will change as a result of a ring being positioned against the sleeve 92. If the vacuum sensor 232 does not sense a change in the vacuum force, a condition indicating that a ring has not been picked up will be produced. When the sensor 232 senses that a ring has not been picked up, the apparatus can position the head 188 to make a second attempt to pick up a ring or can provide an indication to the operator that this failure condition exists. In either event, the sensor 232 provides feedback as to the success of each ring pick up operation.

In use, the retaining means mounting station 80 positions rings relative to the connector positioned on a nest as each nest is indexed relative to the ring applying means 152. A plurality of rings are fed from the feeder to the track 116 under vibratory action whereupon they are sequentially positioned on a shuttle 174 of the ring locating means 150. The gate assembly 168 is employed to meter individual rings from the track 116 to the recess 176 in the shuttle 151. The gate assembly 168 constrains a queue of rings and controllably releases a single ring into an empty recess 149.

The shuttle 151 is reciprocated (177) relative to the applying means 152 to precisely and repeatably position a ring beneath the ring applying head 188. In the preferred embodiment as illustrated herein, the shuttle includes a vacuum which is activated when a ring is positioned in the recess 149. The vacuum is drawn through the annular orifice 184 to retain the ring in the recess 149 on the shuttle 151. Once the shuttle positions the ring underneath the applying head, the vacuum drawn through the annular orifice 184 and the vacuum drawn through the applying head 188 are synchronously deactivated and activated, respectively. Deactivating the shuttle vacuum allows the activated applying head vacuum to precisely lift the ring off of the shuttle and onto the end 224 of the sleeve 192. The shuttle 151 is retracted and a nest is advanced into position underneath the applying head 188.

The applying head is driven downwardly (82) to position the ring over the free end 48 of the elongated body 22. When the head is driven downwardly, the aperture 222 passes over and along the outside of the elongated body 22. During the displacement of the head 188 along the axis 190, a spring 234 retained in a bore 236 of the plunger 202 is compressed by the axial displacement of the plunger 202 within the cavity 198. When the ring is properly positioned along the elongated body 22, the head is retracted upwardly along the axis 190 thereby removing the elongated body 22 from the aperture 222. The upward displacement of the head results in the plunger 202 moving downwardly through the cavity 198 under the influence of the compressed spring 234. The spring forces position the plunger 202 such that the tip 220 once again is positioned within the aperture 222. The tip 220 is positioned against the free end 48 of the elongated body 22 until the body 22 clears the aperture 222 to prevent the body 22 from being caught in the sleeve and lifted from the nest. The completed connector retained in the nest is advanced out of position relative to the retaining means mounting station 80 and is advanced to the assembly inspection station 84 for operations as discussed hereinabove.

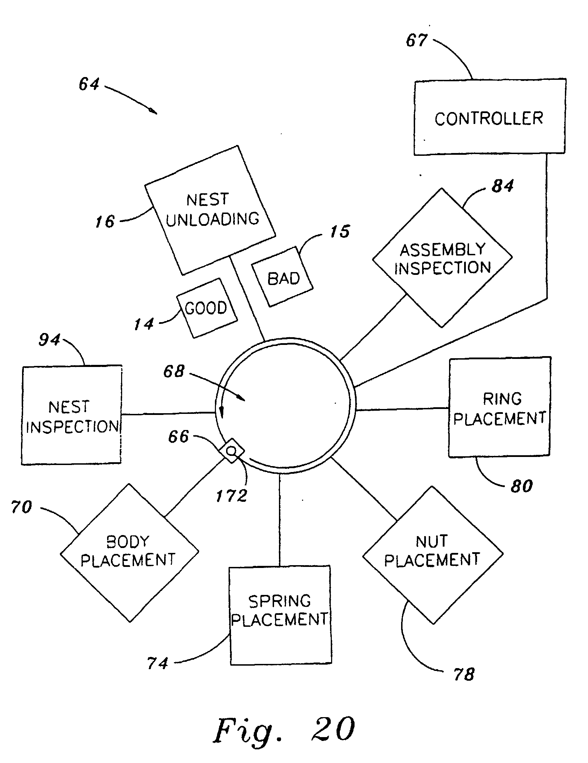

The nest 66 is indexed into position for inspection at the inspection station 84 in accordance with the description provided hereinabove. After inspection, the nest and the assembled connector are advanced to the nest unloading station in accordance with the description provided hereinabove. Finally, the nest is indexed to the nest inspection station 94 as shown in FIG. 20. The nest inspection station operates in essentially the same manner as the assembly inspection station 84 except that only one beam is produced across the nest. The beam is positioned to pass above the nest in alignment with the bore 72. If the nest is empty, the beam path is connected and an empty nest signal is transmitted to the controller. If a component such as the elongated body 22, biasing means 26, coupling nut 24, or retaining ring 28 are positioned on the nest, the beam path is disrupted by the component thereby indicating that the nest is not empty. A loaded nest signal is transmitted to the controller which alerts an operator by means of a visual or auditory signal. The operator can then remove the component from the loaded nest on the fly or, preferably, stopping the process using any one of several stop buttons 238 positioned around the indexing table. The loaded nest is then cleared and the operator reinitiates the assembly process by operating appropriate controls on the controller.

## Claims

1. A method of assembling an optical fiber connector (20) including a tubular body (22) having a longitudinal axis (46) and opposed free ends (48, 50), a coupling nut (24) operatively associated with said tubular body (22), biasing means (26) positioned between said tubular body (22) and said coupling nut (24), and retaining means (28) being attachable to said tubular body (22) abutting said coupling nut (24) for retaining said biasing means (26) in compression between said coupling nut (24) and said tubular body (22), said method being **characterised by** the steps of:
positioning said elongated body (22) with one free end (48) being exposed;
positioning said biasing means (26) over said exposed free end (48) of said tubular body (22) for placing said biasing means (26) on said tubular body;
positioning said coupling nut (24) over said exposed free end (48) of said tubular body (22) for placing said coupling nut (24) on said tubular body (22), said coupling nut (24) abutting said biasing means (26);
moving said coupling nut (24) relative to said tubular body (22) for compressing said biasing means (26) between said coupling nut (24) and said tubular body (22); and
applying said retaining means (28) over said exposed free end (48) and axially positioning said retaining means (28) so that it engages an outside surface (56) of said tubular body (22) for retaining said biasing means (26) in a compressed state.

2. The method according to claim 1, further including the step of generally simultaneously moving said coupling nut (24) and applying said retaining means (28) to the outside of said tubular body (22) for compressing said biasing means (26) and retaining said biasing means (26) in compression.

3. The method according to claim 1 or 2, wherein said retaining means (28) is a continuous ring having an inner rim defining an aperture (63), further comprising the steps of:
axially aligning said aperture (63) of said continuous ring (28) with said tububar body (22); and
axially displacing said continuous ring (28) relative to the outside surface (56) of said tubular body (22).

4. The method according to any preceding claim wherein the step of applying and positioning said retaining means (28) comprises driving said retaining means (28) along said tubular body (22) to a selected location for placing said biasing means (26) in compression between said coupling nut (24) and said tubular body (22).

5. The method according to claim 4, further comprising the steps of indexing a fixture (66) retaining said tububar body (22) sequentially through the assembly steps.

6. An apparatus for assembling an optical fiber connector (20), said optical fiber connector including a tubular body (22) having a longitudinal axis (46) and opposed free ends (48, 50), a coupling nut (24) operatively associated with said tubular body (22), biasing means (26) positioned between said tubular body (22) and said coupling nut (24), and retaining means (28) being attachable to said tubular body (22) abutting said coupling nut (24) for retaining said biasing means (26) in compression between said coupling nut (24) and said tubular body (22), said apparatus comprising:
a fixture (66) for positioning said tubular body (22) in a selected orientation with one free end (48) of said tubular body (22) being exposed;
means (70) for placing said tubular body (22) in retaining engagement with said fixture (66) in a selected orientation;
means (74) for placing said biasing means (26) on said tubular body (22) over said exposed free end (48);
means (78) for placing said coupling nut (24) in a selected orientation on said tububar body (22) over said exposed free end (48), said coupling nut (24) positioned on said tububar body (22) abutting said biasing means (26); and
means (80) for mounting said retaining means (28) over said exposed free end (48) and axially positioning said retaining means (28) so that it engages an outside surface (56) of said tubular body (22), said mounting means (80) locating said retaining means (28) on said tubular body (22) in a position for compressing said biasing means (26) between said coupling nut (24) and said tubular body (22).

7. The apparatus according to claim 6, further comprising means for orientating said retaining means in a selected orientation for proper placement on and engagement with said tubular body.

8. The apparatus according to claim 6, said means for mounting said retaining means (28) further comprising:
means (150) for locating said retaining means (28) relative to said free end (48) of said elongated body (22),
vacuum means (120) for placing said retaining means (28) being positionable relative to said locating means (150) for moving said retaining means (28) from said locating means (150) under the influence of vacuum forces; and
means (154) for driving operatively associated with said vacuum means (188) for controllably driving said retaining means (28) into engagement with said outside surface (56) of said tubular body (22) for retaining said coupling nut (24) and said biasing means (26) in compression on said tububar body (22).

9. The apparatus to claim 6, 7 or 8, wherein said means (150) for locating produces a vacuum force for holding said retaining means (28) thereon while locating said retaining means (28) relative to said vacuum means (120).

10. Apparatus according to claim 9, further comprising a vacuum sensor coupled to said vacuum means (120) for sensing whether said vacuum means (120) moves said retaining means (28) from said locating means (150).

11. An optical fiber connector comprising:
a tubular body (22) having an optical fiber entry end (48), an optical fiber connecting end (50); and a central axis (46), a coupling nut (24) operatively associated with said tubular body (22), said tubular body (22) extending through said coupling nut (24), said coupling nut (24). being movable along said central axis (46) relative to said tubular body (22); biasing means (26) positioned between said tubular body (22) and said coupling nut (24), and retaining means (40) attached to an outside surface (56) of said tubular body (22) for retaining said biasing means (26) in a compressed state,
**characterised in that** said retaining means (40) is engageable over an exposed free end (48) of said tubular body (22) and axially positionable so as to retain said biasing means (26) in a compressed state.

12. The optical fiber connector (20) according to claim 11 further comprising:
a retaining means attachment zone (38) located on an outside surface (56) of said tubular body (22) between said optical fiber entry end (48) and said optical fiber connecting end (50), said retaining means attachment zone (38) being configured for accepting a radially attached retaining means (52) and an axially attached retaining means (28) on said tubular body (22).

13. The connector (20) according to claim 12, said retaining means attachment zone (38) including said outside surface (56) of said tubular body (22) having an annular groove (54) formed therein.

14. The optical fiber connector (20) according to claim 13, wherein said retaining means attachment zone (38) includes said annular groove (54) for engagement by a radially attachable C-ring (52) and an annular ridge (60) formed on a wall (42) of said tubular body (22), a generally continuous ring (28) being axially positionable on the outside surface (56) of said tubular body (22) between said annular ridge (60) and said optical fiber entry end (48).

15. The connector (20) according to claim 11, 12, 13 or 14 wherein said retaining means attachment zone (38) is configured (18) for accepting said retaining means (40) on said tubular body (22) and preventing said biasing means (26) from being caught between said outside surface (56) of said tubular body (22) and said coupling nut (24).

## Patentansprüche

1. Verfahren zur Montage eines Lichtwellenleitersteckverbinders (20) mit einem röhrenförmigen Körper (22), der eine Längsachse (46) und einander gegenüberliegende freie Enden (48, 50), eine dem röhrenförmigen Körper (22) wirkzugeordnete Kopplungsmutter (24), ein zwischen dem röhrenförmigen Körper (22) und der Kopplungsmutter (24) positioniertes Vorspannmittel (26) und ein Haltemittel (28), das so an dem röhrenförmigen Körper (22) angebracht werden kann, dass es an die Kopplungsmutter (24) anstößt, um das Vorspannmittel (26) zwischen der Kopplungsmutter (24) und dem röhrenförmigen Körper (22) in komprimiertem Zustand festzuhalten, aufweist, **gekennzeichnet durch** die folgenden Schritte:
Positionieren des röhrenförmigen Körpers (22) derart, dass ein freies Ende (48) davon freiliegt;
Positionieren des Vorspannmittels (26) über das freiliegende freie Ende (48) des röhrenförmigen Körpers (22) zur Anordnung des Vorspannmittels (26) auf dem röhrenförmigen Körper;
Positionieren der Kopplungsmutter (24) über das freiliegende Ende (48) des röhrenförmigen Körpers (22) zur Anordnung der Kopplungsmutter (24) auf dem röhrenförmigen Körper (22), wobei die Kopplungsmutter (24) an das Vorspannmittel (26) anstößt;
Bewegen der Kopplungsmutter (24) bezüglich des röhrenförmigen Körpers (22) zur Komprimierung des Vorspannmittels (26) zwischen der Kopplungsmutter (24) und dem röhrenförmigen Körper (22); und
Anordnen des Haltemittels (28) über das freiliegende freie Ende (48) und axiales Positionieren des Haltemittels (28) derart, dass es eine Außenfläche (56) des röhrenförmigen Körpers (22) zum Festhalten des Vorspannmittels (26) in einem komprimierten Zustand in Eingriff nimmt.

2. Verfahren nach Anspruch 1, weiterhin mit dem Schritt des allgemein gleichzeitigen Bewegens der Kopplungsmutter (24) und Anordnens des Haltemittels (28) an der Außenseite des röhrenförmigen Körpers (22) zum Komprimieren des Vorspannmittels (26) und Festhalten des Vorspannmittels (26) im komprimierten Zustand.

3. Verfahren nach Anspruch 1 oder 2, bei dem es sich bei dem Haltemittel (28) um einen durchgehenden Ring handelt, der einen eine Öffnung (63) definierenden Innenrand aufweist, weiterhin mit den Schritten des:
axialen Ausrichtens der Öffnung (63) des durchgehenden Rings (28) auf den röhrenförmigen Körper (22); und
axialen Verschiebens des durchgehenden Rings (28) bezüglich der Außenfläche (56) des röhrenförmigen Körpers (22).

4. Verfahren nach einem der vorhergehenden Ansprüche, bei dem der Schritt des Anordnens und Positionierens des Haltemittels (28) das Treiben des Haltemittels (28) entlang dem röhrenförmigen Körper (22) zu einer ausgewählten Stelle zur Komprimierung des Vorspannmittels (26) zwischen der Kopplungsmutter (24) und dem röhrenförmigen Körper (22) umfasst.

5. Verfahren nach Anspruch 4, weiterhin mit den Schritten des sequentiellen Schaltens einer den röhrenförmigen Körper (22) festhaltenden Halterung (66) durch die Montageschritte.

6. Vorrichtung zur Montage eines Lichtwellenleitersteckverbinders (20), wobei der Lichtwellenleitersteckverbinder einen röhrenförmigen Körper (22), der eine Längsachse (46) und einander gegenüberliegende freie Enden (48, 50) hat, eine dem röhrenförmigen Körper (22) wirkzugeordnete Kopplungsmutter (24), ein zwischen dem röhrenförmigen Körper (22) und der Kopplungsmutter (24) positioniertes Vorspannmittel (26) und ein Haltemittel (28), das so an dem röhrenförmigen Körper (22) angebracht werden kann, dass es an die Kopplungsmutter (24) anstößt, um das Vorspannmittel (26) zwischen der Kopplungsmutter (24) und dem röhrenförmigen Körper (22) in komprimiertem Zustand festzuhalten, enthält, wobei die Vorrichtung Folgendes umfasst:
eine Halterung (66) zur Positionierung des röhrenförmigen Körpers (22) in einer gewählten Ausrichtung, wobei ein freies Ende (48) des röhrenförmigen Körpers (22) freiliegt;
ein Mittel (70) zur Anordnung des röhrenförmigen Körpers (22) in Halteeingriff mit der Halterung (66) in einer gewählten Ausrichtung;
ein Mittel (74) zur Anordnung des Vorspannmittels (26) am röhrenförmigen Körper (22) über das freiliegende freie Ende (48);
ein Mittel (78) zur Anordnung der Kopplungsmutter (24) in einer gewählten Ausrichtung am röhrenförmigen Körper (22) über das freiliegende freie Ende (48), wobei die Kopplungsmutter (24) so auf dem röhrenförmigen Körper (22) positioniert ist, dass sie an das Vorspannmittel (26) anstößt; und
ein Mittel (80) zum Anbringen des Haltemittels (28) über das freiliegende freie Ende (48) und axialen Positionieren des Haltemittels (28) derart, dass es eine Außenfläche (56) des röhrenförmigen Körpers (22) in Eingriff nimmt, wobei das Anbringmittel (80) das Haltemittel (28) an dem röhrenförmigen Körper (22) in einer Position zum Komprimieren des Vorspannmittels (26) zwischen der Kopplungsmutter (24) und dem röhrenförmigen Körper (22) anordnet.

7. Vorrichtung nach Anspruch 6, weiterhin mit einem Mittel zum Ausrichten des Haltemittels in einer gewählten Ausrichtung zur ordnungsgemäßen Anordnung an und zum ordnungsgemäßen Eingriff mit dem röhrenförmigen Körper.

8. Vorrichtung nach Anspruch 6, wobei das Mittel zum Anbringen des Haltemittels (28) weiterhin Folgendes umfasst:
ein Mittel (150) zur Positionierung des Haltemittels (28) bezüglich des freien Endes (48) des röhrenförmigen Körpers (22),
ein Unterdruckmittel (120) zur derartigen Anordnung des Haltemittels (28), dass es bezüglich des Positioniermittels (150) so angeordnet werden kann, dass es das Haltemittel (28) unter dem Einfluss von Unterdruckkräften aus dem Positioniermittel (150) bewegen kann; und
ein dem Unterdruckmittel (120) wirkzugeordnetes Treibmittel (154) zum steuerbaren Treiben des Haltemittels (28) in Eingriff mit der Außenfläche (26) des röhrenförmigen Körpers (22), um die Kopplungsmutter (24) und das Vorspannmittel (26) in komprimiertem Zustand am röhrenförmigen Körper (22) festzuhalten.

9. Vorrichtung nach Anspruch 6, 7 oder 8, bei der das Positioniermittel (150) eine Unterdruckkraft zum Halten des Haltemittels (28) daran unter Positionierung des Haltemittels (28) bezüglich des Unterdruckmittels (120) erzeugt.

10. Vorrichtung nach Anspruch 9, weiterhin mit einem mit dem Unterdruckmittel (120) verbundenen Unterdrucksensor zur Erfassung, ob das Unterdruckmittel (120) das Haltemittel (28) aus dem Positioniermittel (150) bewegt.

11. Lichtwellenleitersteckverbinder, der Folgendes umfasst:
einen röhrenförmigen Körper (22) mit einem Lichtwellenleitereinlassende (48), einem Lichtwellenleiterverbindungsende (50) und einer mittleren Achse (46); eine dem röhrenförmigen Körper (22) wirkzugeordnete Kopplungsmutter (24), wobei sich der röhrenförmige Körper (22) durch die Kopplungsmutter (24) erstreckt und die Kopplungsmutter (24) bezüglich des röhrenförmigen Körpers (22) entlang der mittleren Achse (46) bewegbar ist; ein zwischen dem röhrenförmigen Körper (22) und der Kopplungsmutter (24) angeordnetes Vorspannmittel (26) und ein an einer Außenfläche (56) des röhrenförmigen Körpers (22) befestigtes Haltemittel (40) zum Festhalten des Vorspannmittels in einem komprimierten Zustand,
**dadurch gekennzeichnet, dass** das Haltemittel (40) über ein freiliegendes freies Ende (48) des röhrenförmigen Körpers (22) in Eingriff gebracht werden kann und in Axialrichtung so positionierbar ist, dass es das Vorspannmittel (26) in einem komprimierten Zustand festhält.

12. Lichtwellenleitersteckverbinder (20) nach Anspruch 11, weiterhin mit:
einem an einer Außenfläche (56) des röhrenförmigen Körpers (22) zwischen dem Lichtwellenleitereinlassende (48) und dem Lichtwellenleiterverbindungsende (50) angeordneten Haltemittelbefestigungsbereich (38), der zur Aufnahme eines radial befestigten Haltemittels (52) und eines axial befestigten Haltemittels (28) am röhrenförmigen Körper (22) konfiguriert ist.

13. Steckverbinder (20) nach Anspruch 12, bei dem der Haltemittelbefestigungsbereich (38) die Außenfläche (56) des röhrenförmigen Körpers (22) enthält, in der eine ringförmige Nut (54) ausgebildet ist.

14. Lichtwellenleitersteckverbinder (20) nach Anspruch 13, bei dem der Haltemittelbefestigungsbereich (38) die ringförmige Nut (54) zur Ineingriffnahme durch einen radial befestigbaren C-Ring (52) und einen an einer Wand (42) des röhrenförmigen Körpers (22) ausgebildeten ringförmigen Steg (60) enthält, wobei ein allgemein durchgehender Ring (28) an der Außenfläche (56) des röhrenförmigen Körpers (22) zwischen dem ringförmigen Steg (60) und dem Lichtwellenleitereinlassende (48) axial positionierbar ist.

15. Verbinder (20) nach Anspruch 11, 12, 13 oder 14, bei dem der Haltemittelbefestigungsbereich (38) zur Aufnahme des Haltemittels (40) auf dem röhrenförmigen Körper (22) und zum Verhindern, dass das Vorspannmittel (26) zwischen der Außenfläche (56) des röhrenförmigen Körpers (22) und der Kopplungsmutter (24) hängen bleibt, konfiguriert (18) ist.

## Revendications

1. Procédé d'assemblage d'un connecteur de fibre optique (20) comprenant un corps tubulaire (22) ayant un axe longitudinal (46) et des extrémités libres opposées (48, 50), un écrou d'accouplement (24) associé en fonctionnement avec ledit corps tubulaire (22), des moyens de rappel (26) positionnés entre ledit corps tubulaire (22) et ledit écrou d'accouplement (24), et un moyen de retenue (28) pouvant être fixé audit corps tubulaire (22) contigu audit écrou d'accouplement (24) pour retenir lesdits moyens de rappel (26) en compression entre ledit écrou d'accouplement (24) et ledit corps tubulaire (22), ledit procédé étant **caractérisé par** les étapes de :
positionnement dudit corps tubulaire (22) avec une extrémité libre exposée (48) ;
positionnement desdits moyens de rappel (26) par-dessus ladite extrémité libre exposée (48) dudit corps tubulaire (22) pour placer lesdits moyens de rappel (26) sur ledit corps tubulaire ;
positionnement dudit écrou d'accouplement (24) par-dessus ladite extrémité libre exposée (48) dudit corps tubulaire (22) pour placer ledit écrou d'accouplement (24) sur ledit corps tubulaire (22), ledit écrou d'accouplement (24) étant contigu auxdits moyens de rappel (26) ;
déplacement dudit écrou d'accouplement (24) par rapport audit corps tubulaire (22) pour comprimer lesdits moyens de rappel (26) entre ledit écrou d'accouplement (24) et ledit corps tubulaire (22) ; et
par l'application dudit moyen de retenue (28) par-dessus ladite extrémité libre exposée (45) et le positionnement axial dudit moyen de retenue (28) de façon qu'il s'engage sur une surface extérieure (56) dudit corps tubulaire (22) pour retenir lesdits moyens de rappel (26) dans un état comprimé.

2. Procédé selon la revendication 1, comprenant en outre l'étape consistant généralement à déplacer simultanément ledit écrou d'accouplement (24) et à appliquer ledit moyen de retenue (28) à l'extérieur dudit corps tubulaire (22) pour comprimer lesdits moyens de rappel (26) et retenir lesdits moyens de rappel (26) en compression.

3. Procédé selon la revendication 1 ou 2, dans lequel ledit moyen de retenue (28) est une bague continue ayant une bordure intérieure qui définit une ouverture (63), comprenant en outre les étapes :
d'alignement axial de ladite ouverture (63) de ladite bague continue (28) avec ledit corps tubulaire (22) ; et
de déplacement axial de ladite bague continue (28) par rapport à la surface extérieure (56) dudit corps tubulaire (22).

4. Procédé selon l'une quelconque des revendications précédentes, dans lequel l'étape d'application et de positionnement dudit moyen de retenue (28) comprend la poussée dudit moyen de retenue (28) le long dudit corps tubulaire (22) à un emplacement sélectionné pour placer lesdits moyens de rappel (26) en compression entre ledit écrou d'accouplement (24) et ledit corps tubulaire (22).

5. Procédé selon la revendication 4, comprenant en outre les étapes consistant à indexer un dispositif (66) retenant ledit corps tubulaire (22) de façon séquentielle durant les étapes d'assemblage.

6. Appareil pour assembler un connecteur de fibre optique (20), ledit connecteur de fibre optique comprenant un corps tubulaire (22) ayant un axe longitudinal (46) et des extrémités libres opposées (48, 50), un écrou d'accouplement (24) associé en fonctionnement avec ledit corps tubulaire (22), des moyens de rappel (26) positionnés entre ledit corps tubulaire (22) et ledit écrou d'accouplement (24), et un moyen de retenue (28) pouvant être fixé audit corps tubulaire (22) étant contigu audit écrou d'accouplement (24) pour retenir lesdits moyens de rappel (26) en compression entre ledit écrou d'accouplement (24) et ledit corps tubulaire (22), ledit appareil comprenant :
un dispositif (66) pour le positionnement dudit corps tubulaire (22) dans une orientation sélectionnée par rapport à une extrémité libre exposée (48) dudit corps tubulaire (22) ;
des moyens (70) pour placer ledit corps tubulaire (22) dans un engagement de retenue avec ledit dispositif (66) dans une orientation sélectionnée ;
des moyens (74) pour placer lesdits moyens de rappel (26) sur ledit corps tubulaire (22) par-dessus ladite extrémité libre exposée (48) ;
des moyens (78) pour placer ledit écrou d'accouplement (24) dans une orientation sélectionnée sur ledit corps tubulaire (22) par-dessus ladite extrémité libre exposée (48), ledit écrou d'accouplement (24) étant positionné sur ledit corps tubulaire (22) contigu auxdits moyens de rappel (26) ; et
des moyens (80) pour monter ledit moyen de retenue (28) par-dessus ladite extrémité libre exposée (48) et positionner dans le sens axial ledit moyen de retenue (28) de façon qu'il s'engage sur une surface extérieure (56) dudit corps tubulaire (22), lesdits moyens de montage (80) plaçant ledit moyen de retenue (28) sur ledit corps tubulaire (22) dans une position se prêtant à la compression desdits moyens de rappel (26) entre ledit écrou d'accouplement (24) et ledit corps tubulaire (22).

7. Appareil selon la revendication 6, comprenant en outre des moyens pour orienter ledit moyen de retenue dans une orientation sélectionnée pour le positionnement et l'engagement corrects sur ledit corps tubulaire.

8. Appareil selon la revendication 6, dans lequel lesdits moyens pour monter ledit moyen de retenue (28) comprennent en outre :
des moyens (150) de positionnement dudit moyen de retenue (28) par rapport à ladite extrémité libre (48) dudit corps tubulaire (22),
des moyens de dépression (120) pour placer ledit moyen de retenue (28) pouvant être positionnés relativement auxdits moyens de positionnement (150) pour déplacer ledit moyen de retenue (28) afin de l'écarte desdits moyens de positionnement (150) sous l'influence des forces de dépression ; et
des moyens de poussée (154) associés en fonctionnement avec lesdits moyens de dépression (188) pour pousser de façon contrôlée ledit moyen de retenue (28) dans un engagement avec ladite surface extérieure (56) dudit corps tubulaire (22) pour retenir ledit écrou d'accouplement (24) et lesdits moyens de rappel (26) en compression sur ledit corps tubulaire (22).

9. Appareil selon la revendication 6, 7 ou 8, dans lequel lesdits moyens de positionnement (150) produisent une force de dépression pour tenir en place ledit moyen de retenue (28) tout en localisant ledit moyen de retenue (28) par rapport auxdits moyens de dépression (120).

10. Appareil selon la revendication 9, comprenant en outre un détecteur de dépression couplé auxdits moyens de dépression (120) pour détecter si lesdits moyens de dépression (120) déplacent ledit moyen de retenue (28) desdits moyens de positionnement (150).

11. Connecteur de fibre optique comprenant :
un corps tubulaire (22) ayant une extrémité d'entrée de fibre optique (48), une extrémité de connexion de fibre optique (50) ; et un axe central (46), un écrou d'accouplement (24) associé en fonctionnement avec ledit corps tubulaire (22), ledit corps tubulaire (22) s'étendant à travers ledit écrou d'accouplement (24), ledit écrou d'accouplement (24) étant déplaçable le long dudit axe central (46) par rapport audit corps tubulaire (22) ; des moyens de rappel (26) positionnés entre ledit corps tubulaire (22) et ledit écrou d'accouplement (24), et un moyen de retenue (40) fixé à une surface extérieure (56) dudit corps tubulaire (22) pour retenir lesdits moyens de rappel (26) dans un état comprimé,
**caractérisé en ce que** ledit moyen de retenue (40) peut s'engager sur une extrémité libre exposée (48) dudit corps tubulaire (22) et peut être positionné axialement de façon à retenir lesdits moyens de rappel (26) dans un état comprimé.

12. Connecteur de fibre optique (20) selon la revendication 11 comprenant en outre :
une zone de fixation de moyens de retenue (38) située sur une surface extérieure (56) dudit corps tubulaire (22) entre ladite extrémité d'entrée de fibre optique (48) et ladite extrémité de connexion de fibre optique (50), ladite zone de fixation de moyens de retenue (38) étant configurée pour accepter un moyen de retenue fixé radialement (52) et un moyen de retenue fixé axialement (28) sur ledit corps tubulaire (22).

13. Connecteur de fibre optique (20) selon la revendication 12, ladite zone de fixation de moyens de retenue (38) comprenant ladite surface extérieure (56) dudit corps tubulaire (22) dans laquelle est formée une gorge annulaire (54).

14. Connecteur de fibre optique (20) selon la revendication 13, dans lequel ladite zone de fixation de moyens de retenue (38) comprend ladite gorge annulaire (54) dans laquelle s'engage une bague en C à montage radial (52) et un cordon annulaire (60) formé sur une paroi (42) dudit corps tubulaire (22), une bague généralement continue (28) pouvant être positionnée axialement sur la surface extérieure (56) dudit corps tubulaire (22) entre ledit cordon annulaire (60). et ladite extrémité d'entrée de fibre optique (48).

15. Connecteur de fibre optique (20) selon la revendication 11, 12, 13 ou 14 dans lequel ladite zone de fixation de moyens de retenue (38) est configurée (18) pour accepter lesdits moyens de retenue (40) sur ledit corps tubulaire (22) et pour empêcher que lesdits moyens de rappel (26) soient coincés entre ladite surface extérieure (56) dudit corps tubulaire (22) et ledit écrou d'accouplement (24).
